# EUROPEAN PATENT APPLICATION

(11) **EP 4 109 291 A1**
(43) Date of publication of application: **28.12.2022**
(21) Application number: 21181574.1
(22) Date of filing: 24.06.2021
(51) Int. Cl.: G06F 16/23

(54) **COMMUNICATION SYSTEM FOR DELETING A TRANSACTION DATASET IN A BLOCKCHAIN NETWORK**

(71) Applicant: TrustCerts GmbH, 45886 Gelsenkirchen (DE); Westfälische Hochschule, 45897 Gelsenkirchen (DE)
(72) Inventor: MOLLIK, Mirko, 45894 Gelsenkirchen (DE)
(74) Representative: Borrmann, Eric

(57) **Abstract**

The present disclosure relates to a communication system comprising communication devices storing a blockchain with chain elements and data blocks being associated with the chain elements. The communication system is configured to delete at least partially a selected transaction dataset of a specific data block of the data blocks, wherein the selected transaction dataset is specified by a deletion transaction dataset. The communication system is configured to store a transaction hash value of the selected transaction dataset within the communication system. The communication devices are configured to communicate with each other in order to achieve an agreement on an addition of a further chain element to the blockchain, wherein the further chain element is associated with a further data block of the communication system and the further data block comprises at least the deletion transaction dataset. Furthermore, the communication system is configured to verify the blockchain including the further chain element by means of the stored transaction hash value of the selected transaction dataset.

## Description

### BACKGROUND

The invention relates in general to the field of blockchain technology and blockchain networks and, in particular, to a communication system providing a blockchain network of various devices and a computer-implemented method for processing a selected transaction dataset within the blockchain network.

Blockchain networks are used to store data transactions of a database in a transparent and redundant manner. As well, the blockchain technology is known to provide a persistent storing of the data transactions. Changing one of the data transactions in a block of the blockchain by a single participant of the blockchain network may provoke a change in at least one hash value of that block. In this case, this change in the hash value of that block may be noticed by any other participant of the blockchain network in a synchronization process. Blockchain technology may be applied in various fields. For example, EP 3 296 913 B1 describes an application of blockchain technology in the field of voting. An application of blockchain technology to solve the double spending problem is disclosed in the following white paper: Satoshi Nakamoto, "Bitcoin: A Peer-to-Peer Electronic Cash System" which may be downloaded via the internet: https://bitcoin.org/bitcoin.pdf.

The blockchain technology may be used to setup a blockchain having data transactions which comprise digital signatures of documents. The digital signatures may be hash values and thereby may be each regarded as a fingerprint of the respective document. In this application the digital signatures may be added in the database. The database may be stored in a blockchain network.

### SUMMARY

Various embodiments provide a communication system, a computer program product and a computer-implemented method as described by the subject matter of the independent claims. Advantageous embodiments are described in the dependent claims. Embodiments of the present invention can be freely combined with each other if they are not mutually exclusive.

In one aspect, the invention relates to a communication system comprising a set of communication devices and data blocks. The set of communication devices comprises a subset of the communication devices, wherein a copy of a blockchain is stored on each communication device of the subset of the communication devices. The blockchain comprises a set of chain elements, wherein each chain element is associated with a respective data block of the data blocks. The data blocks comprise transaction datasets for modifying a database. The set of chain elements comprises a subset of the chain elements. The chain elements of the subset of the chain elements respectively comprise a respective block hash value and a respective chain element hash value. The block hash value of the respective chain element of the subset of the chain elements is dependent on at least one respective transaction hash value, and the respective transaction hash value is a hash value of one of the transaction datasets of the respective data block which is associated with the respective chain element. The chain element hash value of the respective chain element of the subset of the chain elements is dependent at least on the block hash value of the chain element which immediately precedes the respective chain element in the blockchain. Furthermore, the communication system is configured to delete at least partially a selected transaction dataset of a specific data block of the data blocks which comprises the selected transaction dataset and to store a transaction hash value of the selected transaction dataset within the communication system. The selected transaction dataset is specified by a deletion transaction dataset.

The communication devices are configured to communicate with each other in order to achieve an agreement on an addition of a further chain element to the blockchain. The further chain element is associated with a further data block of the communication system. The further data block comprises at least the deletion transaction dataset. Furthermore, the communication system is configured to verify the blockchain including the further chain element by means of the stored transaction hash value of the selected transaction dataset. In one example, the communication system, preferably at least one of the communication devices, may be configured to add the further chain element to the blockchain in response to achieving the agreement on the addition of the further chain element to the blockchain.

In another aspect, the invention relates to a computer-implemented method for processing the selected transaction dataset by means of the communication system. The method comprises performing an at least partial deletion of the selected transaction dataset of the specific data block of the data blocks. The specific data block comprises the selected transaction dataset. The selected transaction dataset is specified by the deletion transaction dataset. The method further comprises storing the transaction hash value of the selected transaction dataset within the communication system. The method further comprises performing a communication among the communication devices in order to achieve the agreement on the addition of the further chain element to the blockchain, wherein the further chain element is associated with the further data block of the communication system. The further data block comprises at least the deletion transaction dataset. The method may further comprise adding the further chain element to the blockchain.

In another aspect, the invention relates to a computer program product for processing the selected transaction dataset by means of the communication system. The computer program product comprises one or more computer-readable storage media and program instructions collectively stored on the one or more computer-readable storage media. The program instructions are configured to perform an at least partial deletion of the selected transaction dataset of the specific data block of the data blocks which comprises the selected transaction dataset, wherein the selected transaction dataset is specified by a deletion transaction dataset. Furthermore, the program instructions are configured to store the transaction hash value of the selected transaction dataset within the communication system. Furthermore, the program instructions are configured to perform a communication among the communication devices in order to achieve the agreement on the addition of the further chain element to the blockchain, wherein the further chain element is associated with the further data block of the communication system. The further data block comprises at least the deletion transaction dataset. The program instructions are configured to verify the blockchain including the further chain element by means of the stored transaction hash value of the selected transaction dataset. In addition, the program instructions may be configured to perform the addition of the further chain element to the blockchain.

### DETAILED DESCRIPTION

The term "configured to perform an action or operation" used in connection with the communication system or one or more communication devices of the communication system or their components means that the communication system or the one or more communication devices or their components have installed on it software, firmware, hardware, or a combination thereof which in operation cause the communication system or the one or more communication devices or their components to perform the operation or action. The operation or action may be the aforementioned partial deletion, the storing, the performing of the communication among the communication devices, and/or the verifying of the blockchain, for example.

Parts of the detailed description may describe data processing procedures, steps or similar symbolic representations of operations for changing data bits of a computer memory. One or more of the communication devices may execute such procedures or steps by means of physical manipulations of physical quantities. The physical quantities may be in the form of electrical, optical or magnetic signals. The electrical, optical or magnetic signals may be stored, transferred, combined, compared or manipulated by means of the one or more communication devices. For the sake of simplicity, the physical quantities may be referred to as values, elements, characters, numbers, messages or the like in the following. For example, sending an exemplary message from one communication device to another communication device may involve sending several exemplary electrical or optical signals from the one communication device to the other communication device.

Terms such as "determining" or "generating" or "sending" or "receiving" or "performing" or "processing" or "executing" or "detecting" or "calculating" or "selecting" or "creating" or "transferring" or "generating" or the like may describe processes of the one or more communication devices that may manipulate the physical quantities in at least one component of the one or more communication devices. Such a manipulation of the physical quantities may involve generating output data being represented in the form of an output set of physical quantities on the basis of input data being represented in the form of an input set of physical quantities by means of the one or more communication devices.

The data blocks and the further data block may be stored on at least one storage device of the communication system, preferably on a respective storage device of at least one or more communication devices of the set of communication devices.

The selected transaction dataset may be processed by means of the communication system, for example, in a manner that at least one of the communication devices deletes at least partially the selected transaction dataset and this communication device or another communication device of the communication system calculates the transaction hash value of the selected transaction dataset.

The term "specific data block" is used in order name the data block which comprises the selected transaction dataset. The chain element which is associated with the specific data block may be referred to as specific chain element in the following. The term "subset of the chain elements" is used in this disclosure because in most cases the blockchain may comprise a genesis chain element. The genesis chain element does not have a chain element of the blockchain preceding the genesis chain element and can therefore be considered as the first chain element of the blockchain. As a consequence, the genesis cannot comprise a chain element hash value which is dependent on a block hash value of a chain element preceding the genesis chain element. The subset of the chain elements is also referred to as subset in the following.

However, the chain elements of the subset respectively comprise the respective chain element hash value depending on the block hash value of the one of the chain elements immediately preceding the respective chain element in the blockchain. The chain element hash value of a first chain element of the subset may depend on a block hash value of the genesis chain element. The first chain element of the subset follows the genesis chain element within the blockchain. The remaining chain elements of the subset may follow the first chain element of the subset in such a manner that the genesis chain element and the chain elements of the subset may build the blockchain.

The block hash value of the genesis chain element may dependent on at least one transaction hash value of one of the transaction datasets of the data block which is associated with the genesis chain element.

The respective chain elements may comprise data such as the respective block hash value and the respective chain element hash value of the respective chain element. The data of the respective chain elements may furthermore comprise a respective time stamp. The respective time stamp may describe a respective point of time or time interval when the respective chain element was generated. The respective chain element hash value of the respective chain elements of the subset may respectively depend on the data of the chain element immediately preceding the respective chain element in the blockchain. For this reason, the chain elements may build a chain which is named the blockchain. The blockchain may have an order of the chain elements in accordance with the time stamps of the data of the chain elements. The later one of the chain elements was generated, the further it may be arranged from the genesis chain element within the blockchain.

The presented communication system may allow to delete the selected transaction dataset at least partially and may allow to verify the blockchain although the selected transaction dataset has been partially or completely deleted. The selected transaction dataset may be at least partially deleted in case it comprises illegal or personal data, for example. A verification of the blockchain may be still possible as the transaction hash value of the selected transaction dataset is stored within the communication system. The specific data block may be verifiable by means of the transaction hash value of the selected transaction dataset although the selected transaction dataset has been partially or completely deleted.

According to one embodiment, the method may further comprise verifying the blockchain including the further chain element by means of the stored transaction hash value of the selected transaction dataset.

For example, a root hash value of a Merkle tree structure of the specific data block or the specific chain element may be calculated using the transaction hash value of the selected transaction dataset. This may be done even though the selected transaction dataset is at least partially deleted from the specific data block. The root hash value of the Merkle tree structure of the specific data block or the specific chain element may be equal to the block hash value of the chain element which is associated with the specific data block. The block hash value of the specific data block may be verified by recalculating this block hash value using the transaction hash value of the selected transaction dataset.

If the block hash value of the specific chain element is verified, the specific data block may be regarded as verified. If the specific data block can be verified, then the specific chain element can be verified by using the verified block hash value of the specific chain element, for example the verified root hash value of the Merkle tree structure of the specific data block, and by using the data of the specific chain element, for example the time stamp of the specific chain element. The specific chain element may be verified by verifying the chain element hash value of the chain element immediately following the specific chain element within the blockchain. For that, the block hash value, the chain element hash value and the value of the time stamp of the specific chain element may be used.

If the specific chain element can be verified, then the blockchain as a whole may be verifiable, wherein the blockchain may include the further chain element. Hence, as the verification of the blockchain is still possible after the deletion of the selected transaction dataset, it may be possible to store all remaining transaction datasets of the data blocks except from the selected transaction dataset in a persistent manner using the stored transaction hash value of the selected transaction dataset. Furthermore, as the further data block comprises the deletion transaction dataset and the further data block may be added to the blockchain, the deletion transaction dataset may be stored in a persistent manner in the blockchain. This may enhance a trust in the at least partial deletion of the selected transaction dataset.

The phrase "the communication system is configured to delete at least partially the selected transaction dataset" means that the communication system is configured to either delete the selected transaction dataset completely or partially. Analogously, the phrase "performing an at least partially deletion of the selected transaction dataset" comprises performing a partial or a complete deletion of the selected transaction dataset. If the selected transaction dataset is deleted partially or completely may depend on the deletion transaction dataset. A partial deletion of the selected transaction dataset may comprise a modification of the selected transaction dataset, in one example. The partial deletion of the selected transaction dataset implies that at least a part of data of the selected transaction dataset is deleted. This may be realized by modifying the part of the data.

The database may comprise entries, i. e. content elements, wherein the entries respectively may have a value which may be changeable by accessing the database. The entries may respectively be designed in the form of a respective string which comprises respective characters and/or numbers. The entries may be arranged in the form of a list, a table or a matrix, in a simple example. The matrix may have multiple dimensions. Generally, the entries may be ordered in any kind of structure within the database. The database may comprise various tables, lists, matrices and/or tensors. The values of the entries may be technical values, such as values of a temperature, a pressure, a concentration etc. In this case, the blockchain may be used to document steps of a technical process in a persistent manner, for example, a chemical process for producing a chemical end product on the basis of reactants. The technical values may describe a respective temperature, pressure and/or concentration of a respective reactant or a respective intermediate. The communication devices may be control devices for controlling and/or steering the chemical process in such an application.

The database may be stored in the form of a shared database on several of the communication devices according to one example. In this case, the communication system may provide a distributed database system. According to another example, a copy of the database may be stored on several of the communication devices, wherein the communication may provide a redundant database storage system. In another example, the database may be stored on a further storage device of the communication system or an external storage device which is not comprised by the communication system.

In one example, the content elements of the database may comprise the transaction datasets. Thus, each content element may comprise one of the transaction datasets, in this example. According to this example, modifying the database may comprise writing the transaction datasets in the entries of the database.

The database may be in the form of a relational database. In one example, the database may comprise a table with columns and rows. In one example, the entries or a first set of the entries of the database may be hash values. Alternatively or in addition, the entries or a second set of the entries of the database may comprise digital signatures and/or public keys. In one example, the entries of the database may comprise documents, images, videos and/or audio data.

The transaction datasets may respectively comprise respective data, such as respective data specifying a corresponding issuer of the respective transaction dataset, respective data specifying a modification of the database and/or a respective digital signature of the corresponding issuer. The respective data specifying the modification of the database, in the following referred to as respective modification data, may each comprise data specifying a selected entry to be modified and a new value of the selected entry. The modification data of the respective transaction dataset may be in the form of a number of a column of the table, a number of a row of the table and the new value. The corresponding issuer of the respective transaction dataset may be one of the communication devices.

The transaction datasets, preferably the modification data of the transaction datasets, may involve specifications on how to exchange items among the communication devices. The items may be assets, products, services and/or amounts of a currency. In one example, the modification data of the respective transaction dataset may specify a respective transaction of a respective item. For example, the modification data of the respective transaction dataset may specify a respective amount, a respective seller and/or a respective potential buyer of the respective item.

The database may be changeable by executing commands which are generated by means of the transaction datasets, preferably by means of the modification data of the transaction datasets, in the following referred to as database commands. The communication system does not necessarily have to comprise the database in any state of the communication system. In one example, one or more communication devices may construct the database by executing the database commands in response to reading out the transaction datasets of the data blocks. Thus, the database may be retrieved by applying the transaction datasets.

The respective communication device may be designed in the form of an electronic device, such as a computer, a smart phone, a tablet or a computer server system, comprising a respective CPU and a respective interface. The respective interface may be designed for a communication with at least one further communication device of the set of communication devices. The communication among the set of communication devices may be performed by means of the internet and/or via radio using electromagnetic waves. The communication system may be configured to establish a hypertext transfer protocol secure (HTTPS) for performing the communication among the communication devices. In one example, the communication devices are connected with each other to form a communication network.

The set of communication devices may be a blockchain network, wherein at least the communication devices of the subset of the communication devices each store the copy of the blockchain. Generally, it may be possible that all communication devices store the copy of the blockchain. In this case the subset of the communication devices is not a real subset. The communication devices may respectively be configured to load the data blocks and the further data block and their respectively associated chain elements into their CPUs and/or storage devices and to execute the respective database commands which are generated by means of the transaction datasets of the data blocks and further transaction datasets of the further data block. The further transaction datasets may comprise the deletion transaction dataset. By executing these database commands an actual state of the database may be retrieved by several of the communication devices or a single communication device of the set of communication devices. Such a retrieving of the database may be considered as a first part of a synchronization process. The single communication device may be one of the communication devices which recently has joined the communication system. The single communication device may download the data blocks and the further data block from one of the further communication devices of the set of communication devices. The data blocks and the further data block, and the chain elements and the further chain element, which are loaded or stored in one or more CPUs, storage devices and/or any other memory devices of the communication devices may be referred to as loaded data blocks and loaded chain elements respectively. Thus, the loaded data blocks comprise the data blocks and the further data block, and the loaded chain elements comprise the chain elements and the further chain element.

The term "associated with" may be understood in the following way. If the respective chain element is associated with the respective data block, then the respective data block is also associated with the respective chain element. The data of the respective chain elements may comprise data for localizing and/or accessing the respective data block the respective chain element is associated with within the communication system.

An association between the respective chain element and the respective data block may be realized according to one or more of the following features. Firstly, the block hash value of the respective chain element of the subset depends on the transaction hash value of at least one transaction dataset of the data block which is associated with the respective chain element of the subset. Therefore, the block hash value of the respective chain element may provide an association with a content of the at least one transaction dataset of the data block which is associated with the respective chain element of the subset. Thus, the association between the respective chain element and the respective data block may be provided by a respective association to the content of the respective data block.

In case, the respective data block which is associated with the respective chain element may comprise only one transaction dataset, the block hash value of the respective chain element of the subset may be equal to the transaction hash value of the single transaction dataset of that associated data block. In case, the respective data block which is associated with the respective chain element may comprise more than one transaction dataset, the block hash value of the respective chain element of the subset may be equal to a root hash value of a respective Merkle tree structure of the respective data block or a respective Merkle tree structure of the chain element the respective data block is associated with. In most cases, the respective data blocks may comprise several transaction datasets. As these transaction datasets may be generally ordered in one block within the respective data block the data blocks are named as blocks.

Secondly, the respective data block which is associated with the respective chain element may be located and/or accessed within the communication system, particularly on a specified storage location of the communication system, on the basis of the data of the respective chain element. The specified storage location may be specified by the data of the respective chain element. In one example, the block hash value of the respective chain element of the subset may serve as a respective identifier of the data block which is associated with the respective chain element. Thus, the respective data block may have an association with the respective chain element by being identifiable within the communication system by means of the data of this respective chain element. The respective identifier of the data block may also be used in the form of an address within the communication system.

The chain element which is associated with the respective data block may be referred to as associated chain element of the respective data block above and in the following. Analogously, the data block being associated with the respective chain element may be referred to as associated data block of the respective chain element in the following.

In one example, a part or all the chain elements respectively comprise the respective data block the respective chain element is associated with. In this case, each chain element and the data block which is associated with the respective chain element may be accessed using a respective address pointer pointing to a respective address in a storage system of the communication system. According to this example, each chain element and its respective associated data block may be stored together contiguously in a respective chunk of storage space in the storage system.

According to another example, the respective chain elements and their respective associated data blocks may each be stored in separate chunks of storage in the storage system. The storage system may be a distributed storage system. For example, the chain elements may be stored in a first part of the storage system and the data blocks may be stored in a second part of the storage system, wherein the first and the second part of the storage system are arranged separately from each other in the storage system.

The term "hash value" as used herein may refer to a respective output value of a hash function. The hash function may be configured to calculate a corresponding hash value of a respective input data of the hash function dependent on the respective input data and an algorithm of the hash function as the respective output value. The algorithm of the hash function may be, without limitation, the secure hash algorithm (SHA)-256. In particular, the hash function may be a cryptographic hash function.

The hash function may calculate the respective hash value of the respective input data such that it is not possible to un-hash the respective hash value of the respective input data to obtain the respective input data. The hash function and its algorithm may be designed such that a slight change in the respective input data of the hash function results in a completely different respective hash value compared to the respective hash value of the respective input data. The respective output value of the hash function may comprise a fixed length independent on a size of the respective input data of the hash function. The length of the respective output value of the hash function may be 256-bit, in case the secure hash algorithm (SHA)-256 is used.

The respective input data of the hash function may be a respective binary file. The respective binary file may represent respective characters and/or numbers in a binary format.

Thus, the chain element hash value of the respective chain element may be respectively equal to a respective output value of the hash function which is determined by means of the hash function using a respective binary representation of the data of the chain element preceding the respective chain element in the blockchain, such as the block hash value, the chain element hash value and/or the time stamp, as the respective input data of the hash function.

Similarly, the transaction hash value of the respective transaction dataset may be respectively equal to a respective output value of the hash function which is calculated by means of the hash function using a respective binary representation of the respective transaction dataset as the respective input data of the hash function.

Analogously, the block hash value of the respective chain element may be respectively equal to a respective output value of the hash function which is calculated by means of the hash function using a respective binary representation of at least a part of the transaction datasets, their respective transaction hash values and/or the root hash value of the Merkle tree structure of the respective data block which is associated with the respective chain element as the respective input data of the hash function. Alternatively, the block hash value of the respective chain element may be the root hash value of the Merkle tree structure of the respective data block which is associated with the respective chain element.

For sake of simplicity, and without limitation, it is assumed that the same hash function may be used for calculating the chain element hash values, the transaction hash values and the block hash values. However, it may also be possible to determine the chain element hash values, the transaction hash values and the block hash values with a set of different hash functions. In this case, a first, second and third hash function may be used to determine the chain element hash values, the transaction hash values and the block hash values respectively.

In case, one or more of the data blocks respectively comprise more than one transaction dataset, the respective data block and/or the associated chain element of the respective data block may comprise the transaction hash value of each of the transaction datasets of the respective data block, in one example. The respective data blocks and/or the respective associated chain elements of the respective data blocks may respectively comprise the respective Merkle tree structure as mentioned above. The Merkle tree structure of the respective block or its associated chain element may imply that the root hash value of the respective Merkle tree structure is calculated and can be recalculated by means of a respective tree structure in which hash values are linked to each other in the form the respective tree.

The respective tree may comprise a root node, leave nodes and non-leave nodes. Branches of the respective tree may lead from the root node to the non-leave nodes and further branches may lead from the non-leave nodes to the leave nodes. The leaf nodes of the respective tree may each be labelled with one of the transaction hash values of the transaction datasets of the respective data block and may build a first layer. The non-leaf nodes may be labelled with non-leaf hash values and may build a second layer or further layers of the respective tree. The non-leaf hash values of the second layer may be respectively determined using the hash function and a respective input string which is formed by a concatenation of at least two respective transaction hash values as the respective input data of the hash function. The root hash value may be a hash value which is determined using the hash function and a further input string which is formed by a concatenation of two or more non-leaf hash values of the highest layer of the non-leaf nodes as the input data of the hash function. For example, if the respective tree comprises only the first and the second layer as layers, then the highest layer is the second layer.

In another example, the transaction hash values of the transaction datasets of the respective data blocks or its respective associated chain elements may be arranged in the form of a hash list or a hash chain. If the respective chain elements or their associated data blocks comprise the respective Merkle tree structure it may have the advantage that the transaction datasets of the respective data block may be verifiable in an efficient manner.

A partial deletion of the selected transaction dataset may, for example, involve deleting just the data specifying the issuer, the modification data and/or the digital signature of the selected transaction dataset. The selected transaction dataset which is partially deleted is referred to as modified selected transaction dataset in the following. The selected transaction dataset which is completely deleted is referred to as deleted selected transaction dataset. As the partial deletion of the selected transaction dataset may modify the selected transaction dataset, the transaction hash value of the modified selected transaction dataset may differ from the transaction hash value of the selected transaction dataset prior to its partial deletion. Therefore, a verification process for verifying the specific data block using the transaction hash value of the modified selected transaction dataset may fail as a verification of the root hash value of the Merkle tree structure of the specific data block may fail when using the using the transaction hash value of the modified selected transaction dataset. For that reason, the communication system may be configured to use the stored transaction hash value of the selected transaction dataset for verifying the specific data block. The stored transaction hash value of the selected transaction dataset refers to the transaction hash value of the selected transaction dataset prior to the at least partial deletion of the selected transaction dataset.

The verification of the blockchain may be considered as a second part of the synchronization process mentioned above. In the following, the verification of the blockchain is described for an exemplary communication device of the communication devices. Generally, each communication device may be designed to perform the verification of the blockchain and, preferably, to perform the first and/or second part of the synchronization process.

The verification of the blockchain may comprise calculating the respective transaction hash values of the transaction datasets of the loaded data blocks in a first step. The exemplary communication device may determine the respective transaction hash value of the respective transaction dataset of the loaded data blocks by using the hash function and the respective binary representation of the respective transaction dataset of the loaded data blocks as the respective input data of the hash function.

Furthermore, the exemplary communication device may calculate the respective non-leaf hash values of the Merkle tree structure of the respective loaded data block or of the Merkle tree structure of its associated chain element in a second step by using the hash function and the respective input string which is formed by the concatenation of the respective at least two transaction hash values of the transaction datasets of the respective data block as the respective input data of the hash function. Analogously, the exemplary communication device may calculate non-leaf hash values of a Merkle tree structure of the further data block or the further chain element.

Furthermore, in a third step, the exemplary communication device may calculate the root hash value of the Merkle tree structure of the respective loaded data block or its associated loaded chain element using the hash function and a respective further input string which is formed by a concatenation of two or more non-leaf hash values of the highest layer of the non-leaf nodes of the Merkle tree structure of the respective loaded data block or chain element as the input data of the hash function. The respective root hash value of the Merkle tree structure of the respective loaded data block or its associated chain element, which is determined according to the first, second and third step, may serve as and maybe referred to in the following as a respective test block hash value of the respective loaded data block or its respective associated chain element.

The exemplary communication device may compare the respective test block hash value of the respective data block with the block hash value of the respective loaded chain element which is associated with the respective data block. If the respective test block hash value of the respective loaded data block is equal to the block hash value of the respective loaded chain element which is associated with the respective loaded data block, then the respective loaded data block which is associated with this respective loaded chain element may be considered as being verified. In this case, the exemplary communication device may assign a verified status to the respective loaded data block. The aforementioned steps of determining the respective test block hash value of the respective loaded data block and comparing this respective value with the block hash value of the respective associated loaded chain element of the respective loaded data block may be referred to as data block verification of the respective loaded data block in the following.

If the transaction hash values of the transaction datasets of the respective loaded data blocks may be structured in the form of the hash list or the hash chain as mentioned above, then the respective test block hash values may be calculated in accordance with these structures respectively and not in accordance to the respective Merkle tree structures. The Merkle tree structures may serve as an example how to structure and verify the transaction datasets and their respective transaction hash values and how to determine the test block hash value of the respective loaded data blocks or its respective associated loaded chain elements.

Furthermore, the exemplary communication device may perform a verification of the chain element hash values of the loaded chain elements. For that, the exemplary communication device may calculate a respective test chain element hash value for each loaded chain element. For example, the exemplary communication device may determine the respective test chain element hash value of the respective loaded chain element by means of the hash function using a respective binary representation of the data of the chain element preceding the respective loaded chain element, such as the chain element hash value and/or the time stamp, and the test block hash value of the chain element preceding the respective loaded chain element as the respective input data of the hash function.

The exemplary communication device may compare the respective test chain element hash value of the respective loaded chain element with the chain element hash value of the respective loaded chain element. If the respective test chain element hash value of the respective loaded chain element is equal to the chain element hash value of the respective loaded chain element, then this respective loaded chain element may be considered as being verified. In this case, the exemplary communication device may assign a verified status to the respective loaded chain element. The aforementioned steps of determining the respective test chain element hash values and comparing these values with the chain element hash values of the respective loaded chain elements may be referred to as chain element verification in the following. If each loaded chain element is verified, then the blockchain including the further chain element may be considered as being verified. Particularly, if each loaded data block and each loaded chain element is verified, then the blockchain including the further chain element may be considered as being verified. The exemplary communication device may assign a verified status to the blockchain including the further chain element if the exemplary communication device detects that all chain elements and all data blocks have a verified status.

The exemplary communication device may determine and validate the respective test chain element hash values of the respective chain elements according to the order of the chain elements within the blockchain.

In the following it is assumed that the verification of the blockchain may be performed after the selected transaction dataset was at least partially deleted and the further chain element was added to the blockchain. Hence, one of the loaded data blocks may be the specific data block. The specific data block either comprises the modified selected transaction dataset or does not comprise the selected transaction dataset anymore after the selected transaction dataset has been at least partially deleted.

According to one embodiment, the method may further comprise setting a marker for specifying the specific data block, the selected transaction dataset or the chain element which is associated with the specific data block. In one example, the marker may be set during the verification of the blockchain. The marker may specify the specific data block or the specific chain element by means of an information presented by the marker being set. This information may provide information about which of the loaded data blocks is the specific data block or which of the chain elements is the specific chain element.

For example, the information presented by the marker being set may be designed in the form of a data block identification number of the specific data block and/or a chain element identification number of the specific chain element. In this case, the marker may be an information file, array or any further data structure comprising the data block identification number of the specific data block and/or the chain element identification number of the specific chain element. Thus, in one example, setting the marker may comprise writing the data block identification number of the specific data block and/or the chain element identification number of the specific chain element in the information file, array or the further data structure.

According to a further example, the marker may be designed in the form of a flag. For example, the communication system may comprise a register, for example a table, comprising a respective flag for each data block. According to this example, the respective flag for the respective data block may be considered as a respective marker of the respective data block. If one of the loaded data blocks is at least partially deleted because of the at least partially deletion of the selected transaction dataset, then the flag of this respective data block may be set to "one". An initial status of the respective flags may be "zero". If one of the flags is set to "one", then the status of this flag may be considered as being set.

The method may further comprise verifying the specific chain element by means of the marker, the stored transaction hash value of the selected transaction dataset and the deletion transaction dataset. According to this embodiment, the communication system may be configured to set the marker for specifying the specific data block or the specific chain element and to verify the specific chain element by means of the marker and the deletion transaction dataset and preferably the stored transaction hash value of the selected transaction dataset.

Generally, the exemplary communication device may be used by a single user. Therefore, a communication device is proposed, wherein the proposed communication device is part of the communication system according to one of the above-mentioned or below mentioned variants. The proposed communication device may be configured to set the marker for specifying the specific data block or the selected transaction dataset or the chain element which is associated with the specific data block. The proposed communication device may be configured to verify the chain element which is associated with the specific data block by means of the marker and the deletion transaction dataset and the stored transaction hash value of the selected transaction dataset. For example, the proposed communication device may store the transaction hash value and the deletion transaction dataset in a memory of the proposed communication device. The proposed communication device may be the exemplary communication device, in one example. Being part of the communication system may involve that the exemplary communication device may store software to perform the first and/or second part of the synchronization process, in one example. In a further example, being part of the communication system may comprise that the exemplary communication device is connected with one or more of the communication devices for performing data transfer, for example exchanging the data blocks.

In one example, one of the communication devices, which may perform the at least partially deletion of the selected transaction dataset, may set the marker in response to the at least partially deletion of the selected transaction dataset. According to the above-mentioned example, the one of the communication devices, which may perform the at least partially deletion of the selected transaction dataset, may set the flag of the specific data block to "one" in response to the at least partially deletion of the selected transaction dataset. According to this example, the marker may be set before the verification of the blockchain.

In one example, the marker being set may be used to indicate that the stored transaction hash value of the selected transaction dataset may be used for determining the test block hash value of the specific data block. In this case, the exemplary communication device may not calculate a hash value based on the modified selected transaction dataset. Generally, the marker being set may be an information about the fact that the selected transaction dataset or that the specific data block has been at least partially deleted.

Preferably, when performing the data block verification of the specific data block, the exemplary communication device may check if the marker is set or not, for example if the flag of the specific data block is set to "zero" or "one". Alternatively, the exemplary communication device may recognize the selected transaction dataset as a void transaction dataset. This may be the case if the data, preferably the modification data, of the selected transaction dataset has been deleted completely. In this case, the exemplary communication device may set the marker in response to recognizing the selected transaction dataset as the void transaction dataset. This may have the advantage that the marker does not have to be set by the communication device which performs the deletion of the selected transaction dataset.

According to a variant, the communication system may be configured to store the transaction hash value of the selected transaction dataset in the form of the data of the selected transaction dataset. According to this variant, the data of the selected transaction dataset may be modified during the at least partially deletion of the selected transaction dataset such that the selected transaction dataset may comprise the transaction hash value of the selected transaction dataset after the at least partially deletion of the selected transaction dataset. Preferably, the selected transaction dataset may only comprise the transaction hash value of the selected transaction dataset.

The exemplary communication device may recognize the transaction hash value of the selected transaction dataset as a hash value, for example by examining a length of the selected transaction dataset. In one example, the length of the selected transaction dataset may be equal to 256 bits if the selected transaction dataset only comprises the transaction hash value of the selected transaction dataset. The exemplary communication device may set the marker of the specific data block in response to recognizing the transaction hash value of the selected transaction dataset as a hash value.

According to a further embodiment, the exemplary communication device may modify the data of the selected transaction dataset during the at least partially deletion of the selected transaction dataset such that the selected transaction dataset may comprise the transaction hash value of the selected transaction dataset and a pointing information after the at least partially deletion of the selected transaction dataset. Hence, the exemplary communication device may overwrite the modification data of the selected transaction dataset with the transaction hash value of the selected transaction dataset and the pointing information, according to this embodiment.

The pointing information may specify the deletion transaction dataset. For example, the pointing information may involve an address of the deletion transaction dataset within a data block storage device of the communication system for storing the loaded data blocks. For example, the pointing information may comprise a data block identification number of the further data block and/or a transaction dataset identification number of the deletion transaction dataset, preferably within the further data block. In one example, the pointing information may be in the form of an address pointer. The respective transaction datasets may be indexed within the corresponding data blocks comprising the respective transaction datasets or may each have a global index.

The pointing information may serve as a link to the deletion transaction dataset in order to simplify the data block verification of the specific data block, and particularly a verification of the specific chain element. The pointing information does not necessarily have to be stored in the selected transaction dataset. The pointing information may be stored within the communication system, for example in a RAM of the exemplary communication device. The pointing information may be considered as the marker according to the aforementioned further embodiment. According to this further embodiment, setting the marker may be equal to overwriting the modification data of the selected transaction dataset with the pointing information. The pointing information may be considered as a hint that the deletion transaction dataset is stored in the further data block, wherein the further data block is associated with the further chain element. The pointing information may indirectly specify the specific data block and/or the specific chain element by pointing to the deletion transaction dataset and by means of information given by the deletion transaction dataset.

To sum up the above-described variants, in most cases, the marker may be set in response to the at least partial deletion of the selected transaction dataset, in response to recognizing the selected transaction dataset as a void transaction dataset, in response to recognizing the stored transaction hash value as a hash value or in response to recognizing the pointing information as a pointing information with a reference to the deletion transaction dataset. The marker being set may be a machine-readable information for verifying the specific data block and/or the specific chain element.

If the marker is set or the selected transaction dataset has been detected as the void transaction dataset or the exemplary communication device has recognized the transaction hash value of the selected transaction dataset as a hash value or the exemplary communication device has recognized the pointing information as the pointing information with the reference to the deletion transaction dataset, then the exemplary communication device may use the stored transaction hash value of the selected transaction for calculating the test block hash value of the specific data block. For example, the exemplary communication device may calculate one of the above mentioned non-leaf hash values of the Merkle tree structure of the specific data block by using the hash function and a specific input string which is formed by a specific concatenation of the transaction hash value of at least one of the transaction datasets of the specific data block and the stored transaction hash value of the selected transaction as the input data of the hash function.

In most cases, the communication system may be configured such that the marker is in a status of being set after the test block hash value of the specific data block has been calculated. If the test block hash value of the specific data block was calculated by means of the stored transaction hash value of the selected transaction dataset and the test block hash value of the specific data block is equal to the block hash value of the specific chain element, then the specific data block and/or the specific chain element may be considered as being temporarily verified. In this case, the exemplary communication device may assign a temporarily verified status to the specific data block and/or the specific chain element. The marker being set may be considered as an indicator for the specific data block and/or the specific chain element having a temporarily verified status. Alternatively or in addition, the marker being set may be considered as an indicator for a need to use the deletion transaction dataset for verifying the specific data block and/or the specific chain element. In this disclosure the term "verified" means "completely verified" if it is not used in the phrase "temporarily verified".

The exemplary communication device may read the deletion transaction dataset during the data block verification of the further data block. In one example, the exemplary communication device may verify each data block of the loaded data blocks after the other following an order of the loaded data blocks. The order of the loaded data blocks may be defined by the order of the loaded chain elements as each loaded data block is associated to one of the loaded chain elements. Particularly, when following the order of the loaded chain elements while performing the chain element verification, the order of the loaded data blocks may be followed as well, as the chain element verification may imply to verify the respective loaded data block each chain element is associated with.

The exemplary communication device may recognize the deletion transaction dataset on the basis of a content of the deletion transaction dataset. In one example, the deletion transaction dataset may comprise a datatype identifier. The datatype identifier may indicate whether a transaction dataset of the transaction datasets is a deletion transaction, particularly the deletion transaction dataset, or not. The content of the deletion transaction dataset may comprise a deletion command or an overwrite command.

According to one embodiment, the exemplary communication device may read the deletion transaction dataset in response to reading the pointing information. In this embodiment, a reading device of the storage device of the exemplary communication device may skip from the specific data block to the further data block within the data block storage device using the pointing information. The data block storage device may be a RAM or a persistent storage of the exemplary communication device. The exemplary communication device may read the pointing information from the modified selected transaction dataset or from the RAM of the exemplary communication device. In one example, the exemplary communication device may read the pointing information in response to recognizing the transaction hash value of the selected transaction dataset as a hash value.

The deletion transaction dataset may comprise information for specifying the selected transaction dataset and preferably for specifying the specific data block and/or the specific chain element. Thus, the selected transaction dataset may be selected by generating the deletion transaction dataset. Preferably, the deletion transaction dataset may comprise further information which of the data of the selected transaction dataset is supposed to be deleted or modified, for example the data specifying the issuer, the modification data and/or the digital signature of the issuer of the selected transaction dataset. The information for specifying the specific data block may comprise the data block identification number of the specific data block. The information for specifying the specific chain element may comprise the chain element identification number of the specific chain element. The information for specifying the selected transaction dataset may comprise the transaction dataset identification number of the selected transaction dataset. In one example, the specific data block may be specified by the transaction dataset identification number of the selected transaction dataset. In this example, the communication system may comprise supplementary information comprising information about which transaction dataset is comprised by which loaded data block. The supplementary information may be provided in the form of a general information file which may be stored in one or more communication devices, preferably in the exemplary communication device.

The exemplary communication device may compare the information for specifying the specific data block, the selected transaction dataset and/or the specific chain element given by the deletion transaction dataset with the information provided by the marker which is set. If the information for specifying the specific data block, the selected transaction dataset and/or the specific chain element given by the deletion transaction dataset matches the information provided by the marker which is set, then the exemplary communication device may indicate the specific data block and/or the specific chain element as being completely verified. In other words, the exemplary communication device may change the status of the specific data block and/or the specific chain element from the temporarily verified status to a completely verified status in this case. The further chain element may be verified according to the chain element verification described above.

If the exemplary communication device skips from the specific data block to the further data block using the pointing information, then the exemplary communication device may be able to change the status of the specific data block from the temporarily verified status to the completely verified status in a faster manner.

In one embodiment, the exemplary communication device may change the status of the specific data block and/or specific chain element from the temporarily verified status to a completely verified status only if the information for specifying the specific data block, the selected transaction dataset and/or the specific chain element given by the deletion transaction dataset matches the information provided by the marker which is set and if the further chain element has a verified status. According to this embodiment, the specific data block and/or the specific chain element may only be completely verified if the further chain element is verified. This may prevent that a manipulated deletion transaction dataset can be used for verifying the specific data block or specific chain element.

In one embodiment, the chain elements following the specific chain element within the blockchain may have a temporarily verified status if the corresponding test block hash value is equal to the block hash value of the respective chain element and the specific chain element has a temporarily verified status. According to this embodiment, the chain elements following the specific chain element within the blockchain may be assigned the completely verified status in response to assigning the completely verified status to the specific chain element. A temporarily verified status of the chain elements following the specific chain element within the blockchain may be accepted as in most cases all chain elements of the blockchain are verified during the verification of the blockchain. Thus, the deletion transaction dataset may be read when performing the verification of the blockchain. In response to reading the deletion transaction dataset the specific data block and/or specific chain element may be completely verified. In one example, the chain elements following the specific chain element may be completely verified in response to assigning the completely verified status to the specific chain element.

The further chain element may be arranged further away from the genesis chain element within the blockchain than the specific chain element, i. e. the further data block may have been generated in a later point of time than the specific data block. As the verification of the blockchain may be performed according to the order of the chain elements, setting the marker may be considered as a creation of an assumption that the specific chain element may be completely verifiable in a later stage of the verification of the blockchain, for example when verifying the further chain element. The assumption may be considered as being verified in response to proving that the information for specifying the specific data block, the selected transaction dataset and/or the specific chain element given by the deletion transaction dataset matches the information provided by the marker which is set.

The above-described variants may also serve as examples, wherein the marker being set may be used as a memory element of the communication system for storing an information about the fact that the specific data block and/or the specific chain element is in the temporarily verified status.

The aforementioned variants may be considered as examples of a usage of the communication system for verifying the blockchain including the further chain element using the marker, the stored transaction hash value of the selected transaction dataset and the deletion transaction dataset. Thus, a usage of the communication system of one of the aforementioned variants is proposed, wherein the usage may comprise verifying the blockchain including the further chain element by means of the stored transaction hash value of the selected transaction dataset. The usage of the communication system for verifying the blockchain may comprise a usage of only the exemplary communication device mentioned above as the verification of the blockchain using the stored transaction hash value of the selected transaction dataset may be performed on only one of the communication devices.

The communication system may be configured to set the marker for specifying the specific data block or the selected transaction dataset or the chain element which is associated with the specific data block according to one of the aforementioned variants in order to realize the verification of the blockchain including the further chain element. Furthermore, the communication system may be configured to verify the chain element which is associated with the specific data block by means of the marker and the deletion transaction dataset. The marker may allow to assign the temporarily verified status to the specific chain element and/or specific data block. The marker may as well be used to perform a complete verification of the specific chain element and/or the specific data block using the deletion transaction dataset. For example, the exemplary communication device may be configured to check if the information for specifying the selected transaction dataset, and preferably the specific data block, given by means of the deletion transaction dataset matches the information given by the marker. The exemplary communication device may be designed to assign a completely verified status to the specific chain element and/or specific data block if the information for specifying the selected transaction dataset, and preferably the specific data block, matches the information given by the marker.

According to a simple embodiment, the agreement on the addition of the further chain element to the blockchain, in the following also referred to as agreement, may be achieved between an issuer of the deletion transaction dataset and a single authorized communication device of the communication devices. The issuer of the deletion transaction dataset may be one of the communication devices. The issuer of the deletion transaction dataset may send the deletion transaction dataset to the single authorized communication device and the single authorized communication device may test whether the further data block which comprises the deletion transaction dataset fulfills given data requirements. Furthermore, the single authorized communication device may test whether the further chain element fulfills given chain element requirements. The single authorized communication device may communicate with the issuer of the deletion transaction dataset to achieve the agreement. For example, the issuer may change the transaction dataset in response to a received failure notice being sent out by the single authorized communication device. The single authorized communication device may be authorized by a state institution or by a selected part of the communication devices.

According to one embodiment, the set of communication devices may comprise validation devices. The validation devices may form a validation subset of the communication devices. According to this embodiment, the communication system may be configured to take a consensus state, wherein in the consensus state of the communication system the agreement is achieved among the validation devices. In the consensus state a ratio or number of the validation devices which have validated the further chain element may be higher than a given ratio and a given number respectively and this has been detected within the communication system. The validation devices may participate in a process of achieving the agreement.

For example, one of the communication devices, in the following referred to as control device, may detect that the ratio or number of the validation devices which have validated the further chain element is higher than the given ratio and the given number respectively. A part or all of the validation devices may respectively send a respective validation message to the control device such that the control device may be able to detect this. The control device may be configured to detect which of the validation devices has validated the further chain element on the basis of the respective validation message which the control device receives from the respective validation device. The control device may be one of the validation devices.

Compared to the embodiment mentioned above, in which the agreement may be achieved between only the single authorized communication device and the issuer of the deletion transaction dataset, this embodiment may have the advantage that the agreement may be performed in a more "democratic" process. By that, an influence of a single communication device, for example the single authorized communication device mentioned above, may be reduced and the communication system may be considered as more trustworthy and secure against attacks. For example, an attacker would need to attack more than just one communication device in order to disturb a process of the agreement.

The validation devices may validate the further chain element according to the given chain element requirements. If the further chain element fulfills the given chain element requirements, then the respective validation device may validate the further chain element. The given chain element requirements may prescribe that the block hash value and the chain element hash value of the further chain element are determined correctly. According to one example, the given chain element requirements may prescribe that the further data block which is associated with the further chain element has a size below or equal to a given maximal data block size. Furthermore, the given chain element requirements may prescribe that the further data block comprises data which fulfills the given data requirements.

The given data requirements may prescribe that the data of the further data block does not contain any personal data and/or illegal data. Furthermore, the given data requirements may prescribe that the deletion transaction dataset may comprise a reason for the at least partially deletion of the selected transaction dataset. One or more validation devices may test whether the reason matches a prescribed list of valid reasons or is detectable as a valid reason by means of a reason recognition model of the communication system. The reason may be a valid reason if the reason indicates that the selected transaction dataset contains personal and/or illegal data.

According to one embodiment, one or all of the validation devices may store identification data for identifying the content element which is specified by the modification data of the selected transaction dataset, in the following also referred to as specific content element. The identification data may comprise a row and a column number of the specific content element, in one example. The one or all of the validation devices may store the identification data. The one or all of the validation devices may check whether any modification data of one of the transaction datasets of the data blocks which follows the specific data block within the blockchain, and preferably which follows the selected transaction dataset within the specific data block, matches the identification data. This modification data which matches the identification data may be referred to as dependent modification data.

The one or all of the validation devices may check whether the dependent modification data comprises an algorithm which defines the new value of the specific content element or a new value of any other content element of the content elements of the database on the basis of an actual value of the specific content element. In this case, the one or all of the validation devices may not validate the further chain element. Furthermore, the one or all of the validation devices may output a warning signal in this case. The warning signal may provoke an abortion of a validation process of the further chain element. By that, it may be prevented that the at least partial deletion of the selected transaction dataset may cause an incorrect determination of the content elements of the database which may be determined on the basis of the dependent modification data.

The validation devices may respectively perform a test whether the data of the further data block fulfills the given data requirements, for example by using pattern recognition methods, such as neuronal networks and/or artificial intelligence methods. In response to performing the test, the respective validation device may confirm that the data requirements are met by the further data block. The respective validation device which confirms that the data requirements are met by the further data block may assign a validated status to further chain element. If an actual ratio of the validation devices which have assigned the validated status to the further chain element is higher or equal to the given ratio and this has been detected within the communication system, for example by means of the control device, then the agreement may be achieved. In response to the achieved agreement, one or more of the validation devices may add the further chain element to the blockchain. Such a variant of the process of achieving the agreement on the addition of the further chain element to the blockchain as described above may be considered as a proof-of-authority-consensus process. Hence, the communication system may preferably be designed to perform the proof-of-authority-consensus process. Alternatively, the communication system may be configured to perform a proof of work protocol for achieving the agreement on the addition of the further chain element to the blockchain.

According to a further embodiment, the set of communication devices may comprise a hierarchy. The hierarchy may divide the communication devices into the validation devices and non-validation devices. According to this embodiment, the validation devices are configured to participate in the process of achieving the agreement on the addition of the further chain element to the blockchain. For example, the validation devices may be assigned rights to participate in the process of achieving the agreement. Furthermore, the validation devices may possess rights to access a voting module. The process of achieving the agreement, in the following also referred to as process of agreement, may be the proof-of-authority-consensus process mentioned above. The non-validation devices may not be configured to participate in the process of agreement. For example, the non-validation devices may not have any rights to participate in the process of agreement. Thus, the non-validation devices may be excluded from the process of agreement. In other words, apart from the validation devices none of the communication devices may be configured to take part in the process of agreement. The advantage of using the hierarchy is that a number of communication devices taking part in the process of agreement, which have to be trusted, may be reduced. By that, an effort of testing whether the communication system is trustworthy may be reduced. The validation subset may comprise less than a half, preferably less than a quarter, of the communication devices.

As only the validation devices may participate in the process of agreement, the process of the agreement may be performed faster compared to a design of the communication system in which all communication devices may participate in this process. In addition, the validation devices may be selected in an initial phase of the design of the communication system. The selection may be based on experienced or proofed trust in the validation devices. After the initial phase, the non-validation devices may join the communication system without a special trust check. The non-validation devices may not be able to harm the process of agreement as these devices do not have a permission to take part in this process.

At least a part of the non-validation devices may be assigned rights to submit a request for adding the deletion transaction dataset to the further data block. According to one embodiment, the validation devices may not be assigned rights to submit the request. By that, the communication devices being able to request for the deletion of the selected transaction dataset are different to the communication devices being in charge of the process of agreement. This may divide the control of data among the communication devices within the communication system. Thus, the communication system may be considered as more trustworthy.

According to one embodiment, the communication system may comprise public keys. The public keys may be respectively assigned to one of the communication devices. In one example, a first part of the public keys is assigned each to one of the validation devices and a second part of the public keys is assigned each to one of the non-validation devices. The transaction datasets may comprise information about the public keys. For example, a minor part of the transaction datasets may comprise the information about the public keys. The transaction datasets of this minor part are referred to as certification datasets in the following. In one example, each certification dataset may comprise information about one public key of the public keys. Furthermore, the communication system may comprise private keys and each of the private keys may correspond to one of the public keys. Thus, the communication system may comprise pairs of private and public keys, wherein the respective pair may correspond to the respective communication device which the respective public key is assigned to.

The deletion transaction dataset may comprise a digital signature which is generated by means of at least one of the private keys, in the following referred to as specific private key. The digital signature of the deletion transaction dataset may be verifiable by means of the public key which corresponds to the specific private key, in the following referred to as specific public key. The digital signature of the deletion transaction dataset may be generated by the communication device which is assigned to the specific public key using the specific private key. The digital signature of the deletion transaction dataset may be a signature of a part or all information comprised by the deletion transaction dataset, for example the information for specifying the selected transaction dataset and preferably for specifying the specific data block and/or the specific chain element.

If the deletion transaction dataset comprises the digital signature which is generated by means of the specific private key, then the deletion transaction dataset may be more trustworthy as it can be proofed that the deletion transaction dataset has been generated by one of the communication devices which is assigned to one of the public keys. In one example, the further chain element may only be validated, preferably by the validation devices, if the digital signature of the deletion transaction dataset is verifiable by means of the specific public key.

Generally, it may be possible that several or all transaction datasets comprise a respective signature, wherein the respective signature may be a signature of the modification data of the respective transaction dataset and may be generated by means of the private key of the issuer of the respective transaction dataset. Generally, the issuer of one or more of the transaction datasets may be one or several of the communication devices, preferably one or several of the client devices mentioned below. Providing the public and private keys for each communication device may provide the communication system in the form of a permissioned communication network. In this case it may be verified any time that the transaction datasets are issued only by one of the communication devices. By that the trust in the communication system may be enhanced.

The information about the respective public key of the respective certification dataset may be in the form of a respective digital certificate of the respective communication device which the respective public key is assigned to.

The communication system, preferably the validation devices, may be configured to generate the respective digital certificate for each communication device. Furthermore, the communication system, preferably the validation devices, may be configured to distribute, store and/or revoke the digital certificate of the respective communication device. The digital certificate of the respective communication device may comprise respective certification data. The respective certification data may comprise information about an issuer of the respective certificate, the public key of the corresponding communication device and about an algorithm for generating the respective public key. The issuer of the respective certificate may be one of the communication devices, preferably one of the validation devices or an external entity, such as a state institution. The respective certification data may also comprise a version number, a serial number and/or an expiry date of the respective public key. Furthermore, the digital certificate of the respective communication device may comprise a respective digital signature of the certification data of the respective digital certificate. The respective digital signature may be generated by the issuer of the respective digital certificate by means of the private key of the issuer, for example by means of the private key of one of the validation devices or the state institution. The digital signature of the respective digital certificate may allow to verify the authenticity and integrity of the respective digital certificate. In order to verify the respective digital certificate a public key of the issuer of the respective digital certificate may be used. Thus, the digital certificates with their digital signatures of their certification data may represent a public key infrastructure. The public keys of the validation devices may be certified by the state institution. In one example, the digital certificates of the validation devices may each comprise a digital signature of the state institution.

The advantage of the information about the respective public key being comprised by the certification datasets is that the information about the public keys, preferably information about the public key infrastructure, may be persistently stored within the blockchain according to this embodiment. In case the information about the respective public key may be in the form of the digital certificates, this information may be considered respectively as an information about assigning the respective public key to the corresponding communication device. The database may comprise the digital certificates and/or information about the digital certificates. For example, the information about the digital certificates may involve a date of revocation of one or more of the digital certificates. During the synchronization process described above, the exemplary communication device may retrieve a history of a generation of the digital certificates. As the information about the public keys may be persistently stored within the blockchain, the exemplary communication device may verify a generation of each digital certificate and public key during the verification of the blockchain. Furthermore, an actual status of each digital certificate may be checked in a fast manner using the database. In this case, the database may preferably be in an updated status. The updated status of the database may be achieved by performing the first part of the synchronization process as described above. The certification datasets may also comprise information about a revocation of a respective digital certificate and/or public key. Thus, the updated database may inform a user about an actual status of the digital certificates and/or public keys.

According to a further embodiment, the public keys which are assigned to the non-validation devices are certified by at least one of the validation devices. Thus, at least one of the validation devices may be configured to sign the public keys or one of the public keys of the non-validation devices by means of the private key of this validation device. By that, the communication system may comprise a chain of trust in which one or more validation devices may serve as a root of the chain of trust. This may have the advantage that a trust check with respect to all the non-validation communication devices may only be performed by testing whether the at least one validation device which has certified one or more public keys of the non-validation devices is trustworthy. In this disclosure, an action of certifying one respective public key of the public keys may comprise signing the respective public key and/or issuing one of the digital certificates which comprises the respective public key.

According to one embodiment, the blockchain may comprise a root certificate. The root certificate may comprise respective digital root signatures which each correspond to one of the validation devices. The respective digital root signature of the root certificate may be a respective digital root signature of an arrangement of the public keys or the digital certificates of the validation devices. The arrangement of the public keys or the digital certificates may be in the form of a list or a table. The respective digital root signature may be generated by means of the private key of the respective validation device which is corresponding to the respective digital root signature. Thus, the respective validation device may be configured to sign the arrangement of the public keys or the digital certificates by means of the respective private key of the respective validation device in order to generate the respective digital root signature. Furthermore, the respective digital root signature of the root certificate may be generated by the respective validation device which corresponds to the respective digital root signature. The respective digital root signatures may serve as a proof that the respective validation devices own the respective private keys. For that reason, a trust in the validation devices may be enhanced. According to one embodiment, one of the transaction datasets of the genesis chain element may comprise the root certificate. According to this embodiment, the public key infrastructure may also involve the root certificate.

According to a further embodiment, the public keys of the validation devices and their corresponding private keys form respective validation pairs of keys and one or more validation pair of keys is issued by at least one external device. The external device is a device not being comprised by the communication system. The external device may be run by an official entity, for example a state institution. Issuing the validation pairs of keys may comprise generating respective X.509-public-key-certificates, one respective X.509-public-key-certificate for each validation pair of keys. The respective X.509-public-key-certificate comprises the public key of the respective validation device. Issuing the validation pairs of keys may further comprise sending the private key of the respective validation pair of key to the respective validation device. This embodiment may further enhance the trust in the validation devices. In one example, the public key infrastructure may comprise the root certificate and at least one validation pair of keys being certified by the external device. This may reduce the need for all validation pair of keys being certified by the external device.

According to one embodiment, the non-validation devices may comprise observer devices and client devices, wherein the observer devices may be configured to perform an indirect communication between the client devices and the validation devices via the observer devices. For example, the observer devices may perform an examination of a request for adding the deletion transaction dataset to the further data block, wherein the request is submitted by one of the client devices. According to this embodiment, one of the client devices may be configured to submit the request. In response to submitting the request by means of one of the client devices, the observer devices may send the request to the validation devices if the deletion transaction dataset fulfills the data requirements. The observer device may check whether the deletion transaction dataset fulfills the data requirements. The deletion transaction dataset may fulfill the data requirements if the reason for deletion of the deletion transaction dataset is valid, for example.

This embodiment may have the advantage that invalid requests for adding potential deletion transaction datasets may be rejected by the observer devices and that these potential deletion transaction datasets may not need to be checked or validated by the validation devices. According to this embodiment, the observer devices may work in the form of a gate to the validation devices. Thus, the validation devices may need to test only candidates of deletion transaction datasets which may have high probability to be validated. Thus, the amount of required computing resources of the validation devices may be reduced. This may be advantageous as the communication system may need computing resources for setting the marker testing the information of the marker against the information of the transaction datasets. For example, the communication system may need computing resources for identifying the deletion transaction dataset among the transaction datasets.

According to one embodiment, the communication system is configured to block a communication between the client devices and the validation devices. According to this embodiment an information may only be passed from one of the client devices to one of the validation devices via the observer devices. To realize this, the validation devices may comprise fire walls for blocking messages from the client devices. This embodiment may as well reduce the amount of required computing resources of the validation devices.

Generally, the client devices may be configured to generate the transaction datasets. Furthermore, the client devices may be configured to propose that one or more of the transaction datasets are added to one of the data blocks. Hence, according to this embodiment, the communication system may be divided into devices which create the transaction datasets, here the client devices, and devices which validate the data blocks comprising the transaction datasets, here the validation devices.

The communication system as such may be configured such that one or more communication devices, preferably the client devices, may generate one or more of the transaction datasets and send them to one or more communication devices, preferably to the validation devices, preferably via the observer devices. Thus, in one example, the client devices may be considered as senders of the transaction datasets and the validation devices may be considered as receivers of the transaction datasets. The validation devices may be considered as senders of the blockchain and the data blocks during the synchronization process. The client devices may be considered as receivers of the blockchain and the data blocks during the synchronization process.

In a further embodiment, the public keys of the client devices may respectively be certified by at least one of the observer devices and the public keys of the observer devices may respectively be certified by at least one of the validation devices. According to this embodiment, one or more of the observer devices may be configured to sign the public keys of the client devices and one or more of the validation devices may be configured to sign the public keys of the observer devices. This embodiment may have the advantage that the chain of trust, and preferably the public key infrastructure, may be extended by an intermediate level, wherein the intermediate level may be presented by the observer devices. This may reduce the time needed for certifying the public keys of the non-validation devices by means of the validation devices. According to this embodiment, the public keys of the client devices may indirectly be certified by the validation devices by using the observer devices which may certify the public keys of the client devices. This may be considered as trustworthy in case the validation devices are considered as trustworthy as the public keys of the observer devices are certified by the validation devices. Thus, the observer devices may be judged as trustworthy by the validation devices. The digital certificates of the client devices may be stored in transaction datasets of one of the chain elements of the blockchain following one of the chain elements comprising the digital certificates of the observer devices. Analogously, the digital certificates of the observer devices may be stored in transaction datasets of one of the chain elements of the blockchain following one of the chain elements comprising the digital certificates of the validation devices, for example the genesis chain element.

According to one embodiment, the set of communication devices may comprise a further subset of the communication devices. A copy of the data blocks may be stored on each communication device of the further subset of the communication devices. The further subset may comprise all communication devices of the set of communication devices which store a respective copy of the data blocks. According to this embodiment, the method may further comprise performing a respective at least partially deletion of the selected transaction dataset in the specific data block of each copy of the data blocks. The respective at least partially deletion of the selected transaction dataset in the specific data block of each copy of the data blocks may respectively be performed analogously to the aforementioned at least partially deletion of the selected transaction dataset of the specific data block. Generally, several copies of the data blocks may be stored within the communication devices. The subset of the communication devices mentioned above may be a real subset of the further subset of the communication devices and vice versa. In most cases, those communication devices which store the data blocks, i. e. the copy of the data blocks, may also store the blockchain, i. e. the copy of the blockchain. According to one embodiment, the selected transaction dataset may be deleted at least partially on each storage device of the communication system on which the selected transaction dataset is stored. If the selected transaction dataset comprises illegal content, this embodiment may provoke that this illegal content is no more be stored on any storage device within the communication system.

According to one embodiment, the communication devices of the further subset may each comprise a respective database. The respective database of the respective communication device of the further subset may be generated by executing the transaction datasets of the data blocks and the further data block. According to this embodiment, the method may further comprise determining a respective database hash value of the database of the respective communication device and checking whether the database hash values of all communication devices of the further subset are all equal. By checking whether the database hash values of the databases of all communication devices of the further subset are equal it may be tested whether all communication devices of the further subset have performed the at least partial deletion of the selected transaction dataset. Thus, if this is the case, then it may be guaranteed that the illegal content of the selected transaction dataset is no more be stored on any of the databases of the respective communication devices of the further subset.

The respective database hash value of the database of the respective communication device may respectively be equal to an output value of the hash function being calculated by means of the hash function using a binary representation of all content elements of the database of the respective communication device as the input data of the hash function.

According to one embodiment, the method may further comprise determining a respective overall transaction dataset hash value for each communication device of the further subset. The respective overall transaction dataset hash value may be calculated by means of the hash function using a binary representation of all transaction datasets of at least the specific data block, preferably all data blocks, of the copy of the data blocks of the respective communication device of the further subset as input data of the hash function. According to this embodiment, the method may further comprise checking whether the overall transaction dataset hash values of all communication devices of the further subset are all equal. By checking whether the overall transaction dataset hash values of all communication devices of the further subset are equal it may be tested whether all communication devices of the further subset have performed the at least partial deletion of the selected transaction dataset. However, determining the respective database hash values may be faster than determining the overall transaction dataset hash values.

According to one embodiment, the method may further comprise adding a second further chain element to the blockchain. The second further chain element may be associated with a second further data block of the communication system. The second further data block may comprise at least a second further transaction dataset. The second further transaction dataset may comprise an evidential information which proves that all database hash values and/or all overall transaction dataset hash values are equal. This embodiment may have the advantage that it can be proven at any time that the selected transaction dataset has been at least partially deleted in the specific data block of all copies of the data blocks within the communication system. This may enhance trust in the fact that the communication system does not store any illegal data and/or that the databases of the communication devices do not contain any illegal data.

In one example, the evidential information may be designed in the form of a set of proving digital signatures. The respective proving digital signature may be a respective digital signature of the database hash value of the database and/or the overall transaction dataset hash value of the respective communication device of the further subset, and preferably of a respective database time stamp. The respective database time stamp may describe a respective point of time when the database of the respective communication device and/or the transaction datasets have been updated according to the blockchain including the further chain element. The respective digital signature of the database hash value of the database of the respective communication device of the further subset may be generated by means of the private key of the respective communication device of the further subset. The set of proving digital signatures may be designed such that it comprises the respective digital signature of the database hash value of the database and/or the overall transaction dataset hash value of each communication device.

### BRIEF DESCRIPTION OF THE SEVERAL VIEWS OF THE DRAWINGS

In the following embodiments of the invention are explained in greater detail, by way of example only, making reference to the drawings in which:
Fig. 1 is a block diagram schematically illustrating selected components of a communication system with communication devices storing a blockchain according to an example of the present subject matter;
Fig. 2 is a block diagram schematically illustrating exemplarily one of the communication devices of Fig. 1;
Fig. 3 depicts an example of the blockchain comprising chain elements being stored on at least one of the communication devices of Fig. 1 and being associated with data blocks comprising transaction datasets for modifying a database;
Fig. 4 illustrates the database being modifiable by means of the transaction datasets of Fig. 3;
Fig. 5 depicts a Merkle tree structure of a first data block of the data blocks shown in Fig. 1.
Fig. 6 depicts a Merkle tree structure of a second data block of the data blocks shown in Fig. 1.
Fig. 7 depicts a Merkle tree structure of a third data block of the data blocks shown in Fig. 1.
Fig. 8 depicts a Merkle tree structure of an i-th data block of the data blocks shown in Fig. 1.
Fig. 9 depicts a Merkle tree structure of an n-th data block of the data blocks shown in Fig. 1.
Fig. 10 illustrates a deletion transaction dataset for deleting at least partially one of the transaction datasets of the data blocks shown in Fig. 3;
Fig. 11 depicts a Merkle tree structure of a further data block being associated with a further chain element of the blockchain of Fig. 3.
Fig. 12 is a block diagram schematically illustrating exemplarily a validation device of the communication devices of Fig. 1 for validating the further chain element shown in Fig. 3;
Fig. 13 illustrates a flowchart of a communication between validation devices of the communication system of Fig. 1 for validating the further chain element shown in Fig. 3;
Fig. 14 shows pairs of private and public keys each being associated with one of the communication devices of the communication system shown in Fig. 1;
Fig. 15 depicts digital certificates each being associated to one of the communication devices of the communication system shown in Fig. 1;
Fig. 16 shows a digital root certificate comprising digital root signatures of the validation devices shown in Fig. 1;
Fig. 17 depicts an arrangement of the public keys of the validation devices shown in Fig. 1;
Fig. 18 shows a flowchart of a computer-implemented method for processing a selected transaction dataset by means of the communication system shown in Fig. 1;
Fig. 19 depicts a further subset of the communication devices of the communication system shown in Fig. 1 comprising respective databases being generated by means of the transaction datasets shown in Fig. 3.

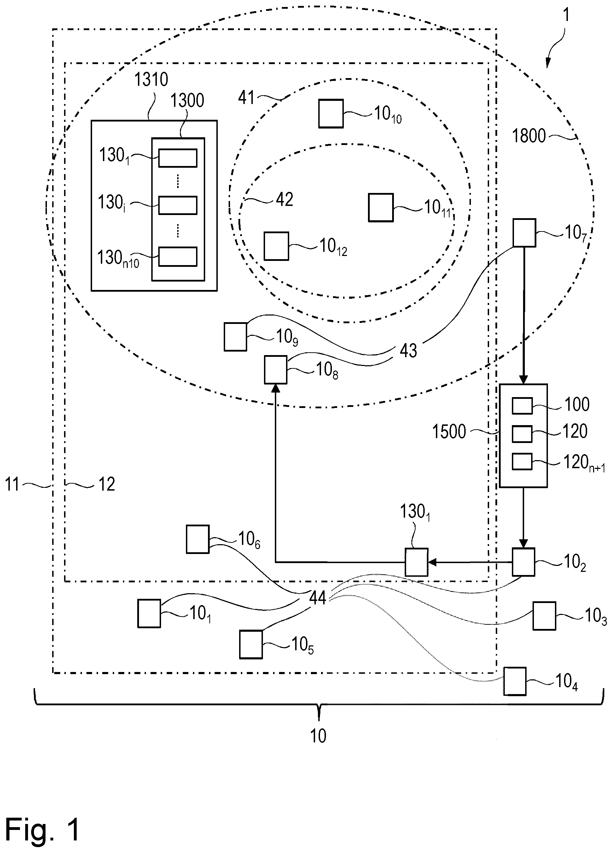

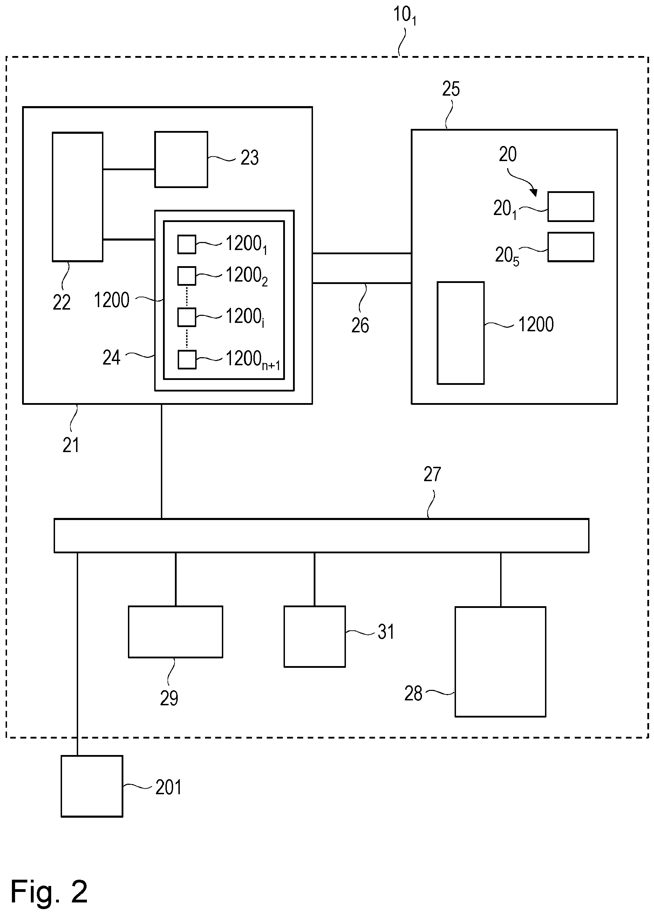

Figure 1 shows a communication system 1 comprising a set of communication devices 10. Figure 2 shows exemplarily one of the communication devices 10, for example a first of the set. It may be possible that all the communication devices 10 are designed similarly, however, this may not be the case in most applications of the proposed method and the proposed communication system. The communication devices 10 may be each a stationary or a mobile device, a personal computer system, a server computer system, a handheld or laptop device, a multiprocessor system, a microprocessor-based system, a programmable electronic device, a network personal computer, a minicomputer system or a mainframe computer system.

The communication devices 10 may be each a general-purpose computing device. The communication devices 10 may each comprise a readable memory, preferably a variety of readable memory. Such memory may include volatile, non-volatile, removable and/or non-removable memory. Generally, most, preferably all, of the communication devices 10 may each comprise basic components being similar or equal to the following basic components of a first communication device 10₁.

As shown in Figure 2, the first communication device 10₁ may comprise as its basic components a processor 21, a RAM 25, a memory bus 26, a system bus 27, a persistent storage 28 and input/output interfaces 29. The processor 21 may comprise a logic unit 22, a register 23 and a cache memory 24. The cache memory 24 may comprise an L1 and an L2 cache. The memory bus 26 may connect the RAM 25 to the processor 21.

Thus, the basic components of the communication devices 10 may respectively include one or more processors or processing units, a random access memory (RAM), a memory bus, input/output interfaces, a network adapter, a persistent storage and a system bus. The respective persistent storage may be in the form a hard disk drive, a solid-state drive, an optical storage device, such as an CD and DVD drive, an USB flash drive or a magnetic tape.

The respective system bus of the communication devices 10, for example the system bus 27, may represent one or more of any of several types of bus structures, for example a memory bus or memory controller, a peripherical bus, an accelerated graphics port, and a processor. The bus structures may include an Industry Standard Architecture (ISA) bus, a Micro Channel Architecture (MCA) bus, an Enhanced ISA (EISA) bus, a Video Electronics Standards Association (VESA) local bus, a Peripheral Component Interconnect (PCI) bus and a Peripherical Component Interconnect Express (PCIe) bus.

The respective buses of the communication devices 10 may couple various of the basic components of the respective communication devices 10. For example, the bus 28 may couple the persistent storage 28 and the input/output interfaces 29 to the processor 21.

The RAM of the respective communication devices 10, for example the RAM 25, may store program modules 20 by way of example. The term "program module" as used herein refers to a set of instructions which contains commands to provoke actions performed by the corresponding processors of the respective communication devices 10, for example the processor 21, when the respective processor, for example the processor 21, may read the commands. The set of instructions may be in the form of a computer-readable program, routine, subroutine or part of a library, which may be executed by the respective processor and/or may be called by a further program being executed by the respective processor. Preferably, the program modules 20 may be executable programs which are compiled according to a type of the respective processor.

The first communication device 10₁ may communicate with one or more external devices 201 such as a keyboard, a pointing device, a display, etc.; one or more devices that enable a user to interact with the first communication device 10₁; and/or any devices (e.g. a network card, modem, etc.) that enable the first communication device 10₁ to communicate with one or more other computing devices. Such communication may be realized via the input/output interfaces 29. Furthermore, the first communication device 10₁ may communicate with one or more networks such as a local area network (LAN), a general wide area network (WAN), and/or a public network (e.g., the internet) via a network adapter 31 of the first communication device 10₁. The network adapter 31 may provide a communication between the basic components and further components of the first communication device 10₁ via the system bus 27.

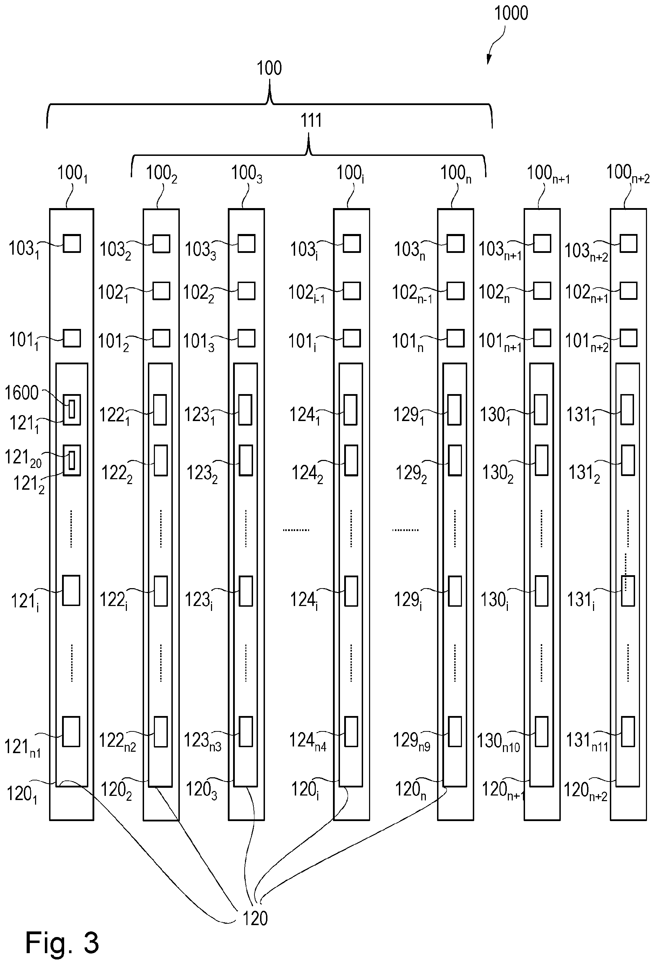

The set of communication devices 10 comprises a subset 11 of the communication devices, wherein a copy of a blockchain 1000 may be stored on each communication device of the subset 11. The blockchain 1000 is depicted in Figure 3 and comprises a set of chain elements 100. The set of chain elements 100 comprises a genesis chain element 100₁ as a first chain element of the blockchain 1000 and a subset 111 of the chain elements 100. The blockchain 1000 may comprise a number of "n" chain elements. In Figure 3 the genesis chain element 100₁, a second chain element 100₂, a third chain element 100₃, an i-th chain element 100ᵢ and an n-th chain element 100ₙ of the blockchain 1000 is shown. The n-th chain element 100ₙ of the blockchain 1000 may be an (n-1)-th chain element of the subset 111. Analogously, the second chain element 100₂, the third chain element 100₃ and the i-th chain element 100ᵢ of the blockchain 1000 may be a first chain element, a second chain element and an (i-1)-th chain element of the subset 111 respectively.

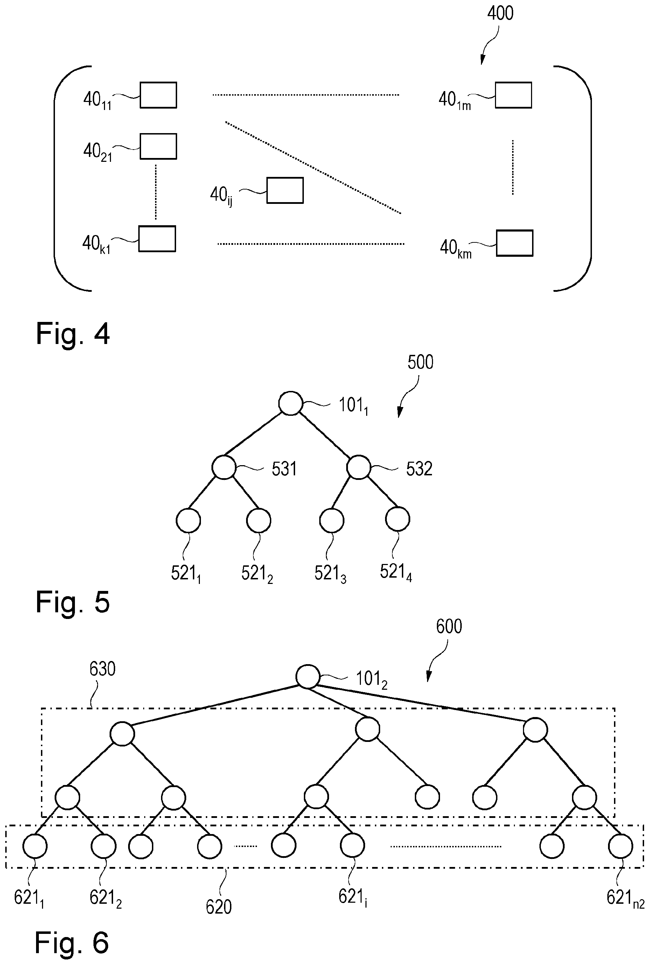

Figure 3 also shows a number of "n" data blocks 120 of the communication system 1, such as a first data block 120₁, a second data block 120₂, a third data block 120₃, an i-th data block 120ᵢ and an n-th data block 120ₙ. The data blocks 120 comprise transaction datasets for modifying a database 400, which is shown in Figure 4. In most cases, the database 400 may be stored within the communication system 1. For example, the database 400 may be stored on several of the communication devices 10.

The database 400 may comprise content elements. The content elements may be arranged in the form of a list, a table or a matrix, in a simple example. The matrix may have multiple dimensions. Generally, the content elements may be ordered in any kind of structure within the database 400. According to the example shown in Figure 4, the content elements may respectively be matrix elements 40ᵢⱼ of the matrix. The matrix shown in Figure 4 comprises "k" rows and "m" columns. Thus, "i" may take values from one to "k", and "j" may take values from one to "m". The content elements may be respectively designed in the form of a respective string containing characters and/or numbers.

According to the example shown in Figure 3, the first data block 120₁, the second data block 120₂, the third data block 120₃, the i-th data block 120ᵢ and the n-th data block 120ₙ may comprise an amount of n₁, n₂, n₃, n₄ and n₉ transaction datasets respectively. In Figure 3, first transaction datasets 121₁, 121₂, ...121ᵢ ..., 121ₙ₁ of the first data block 120₁, second transaction datasets 122₁, 122₂, ...122ᵢ ..., 122ₙ₂ of the second data block 120₂, third transaction datasets 123₁, 123₂, ...123ᵢ ..., 123ₙ₃ of the third data block 120₃, i-th transaction datasets 124₁, 124₂, ...124ᵢ ..., 124ₙ₄ of the i-th data block 120ᵢ and n-th transaction datasets 129₁, 129₂, ...129ᵢ ..., 129ₙ₉ of the n-th data block 120ₙ are exemplarily shown.

The first, second, third, i-th and n-th transaction datasets may respectively comprise respective modification data. To illustrate an example, modification data 121₂₀ of the second transaction dataset 121₂ of the first data block 120₁ is shown in Figure 3. The modification data of the remaining transaction datasets of the data blocks 120 is not shown for sake of clarity and simplicity.

The respective modification data may specify how to modify the database 400. For example, given the example of the database 400, the respective modification data may comprise a respective row number and column number of the matrix. The respective row number and column number may specify a respective selected matrix element of the matrix elements 40ᵢⱼ. The respective modification data may comprise a respective new value of the respective selected matrix element. According to one example, the respective modification data may comprise a respective modification command to modify the database 400 on the basis of the respective modification data, for example on the basis of the respective new value. The respective modification command may be a respective write command, for example a respective overwrite command or a respective write command which appends the respective new value to a respective existing value of the selected matrix element.

Each of the chain elements 100 is associated with one of the data blocks 120. According to one example, which is visualized in Figure 3, respective associations between the respective data blocks 120 and the respective corresponding chain elements of the chain elements 100 may be provided such that each of the chain elements 100 comprises one data block of the data blocks 120. That may imply that a storage device of the communication system 1 which stores one of the chain elements 100 may also store the corresponding data block which the respective chain element is associated with. Figure 3 visualizes exemplarily that the genesis chain element 100₁ may comprise the first data block 120₁, the second chain element 100₂ may comprise the second data block 120₂, the third chain element 100₃ may comprise the third data block 120₃, the i-th chain element 100ᵢ may comprise the i-th data block 120ᵢ and the n-th chain element 100ₙ may comprise the n-th data block 120ₙ. In one example, the respective chain elements 100 may be designed in the form of respective data structures, wherein the respective data structures respectively comprise the corresponding data blocks 120, which are associated with the respective chain elements 100, as respective substructures. The respective substructures may be respective lists or arrays comprising the first, second, third, i-th or n-th transaction datasets respectively.

The chain elements 100 of the blockchain 1000 respectively may comprise header data, such as a respective block hash value and a respective time stamp. The header data may be one variant of the above-mentioned data of the chain elements. In the example according to Figure 3, the chain elements 100 comprise the respective header data and the respective data blocks. According to an example not shown in the figures, the chain elements 100 may only comprise the respective header data and a respective associative information which associates the respective chain element of the chain elements 100 to the respective data block which is associated with the respective chain element. The respective associative information may be in the form of a respective address of a storage location of the respective data block with which the respective chain element is associated.

In Figure 3, a block hash value 101₁ and a time stamp 103₁ of the genesis chain element 100₁, a block hash value 101₂ and a time stamp 103₂ of the first chain element 100₂ of the subset 111, a block hash value 101₃ and a time stamp 103₃ of the second chain element 100₃ of the subset 111, a block hash value 101ᵢ and a time stamp 103ᵢ of the i-th chain element 100ᵢ of the blockchain 1000 and a block hash value 101ₙ and a time stamp 103ₙ of the n-th chain element 100ₙ of the blockchain 1000 is depicted. The time stamps 103₁, 103₂, 103₃, 103ᵢ, 103ₙ, in the following also referred to as time stamps, may each contain information about a point of time of a generation of the genesis chain element 100₁, the second chain element 100₂, the third chain element 100₃, the i-th chain element 100ᵢ and the n-th chain element 100ₙ respectively.

The chain elements of the subset 111 respectively comprise a respective chain element hash value. The respective chain element hash values may be included in the respective header data of the chain elements of the subset 111. Exemplarily, Figure 3 shows a chain element hash value 102₁ of the first chain element 100₂ of the subset 111, a chain element hash value 102₂ of the second chain element 100₃ of the subset 111, a chain element hash value 102ᵢ₋₁ of the (i-1)-th chain element 100ᵢ of the subset 111 and a chain element hash value 102ₙ₋₁ of the (n-1)-th chain element 100ₙ of the subset 111. An (n-2)-th chain element 100ₙ₋₁ of the subset 111 with its block hash value 101ₙ₋₁ which may be equal to an (n-1)-th chain element 100ₙ₋₁ of the blockchain 1000 is not shown for clarity reasons. The same holds for an (i-1)-th chain element 100ᵢ₋₁ of the blockchain 1000 with its block hash value 101ᵢ₋₁.

The communication devices of the subset 11 may respectively store the header data of the chain elements 100 in the RAM of the respective communication device of the subset 11. For example, the first communication device 10₁ may store the header data of the chain elements 100 in the RAM 25. In one example, the communication devices of the subset 11 may respectively store the transaction datasets of the data blocks 120 as well in the RAM of the respective communication device of the subset 11.

Alternatively, the communication devices of the subset 11 may respectively store the transaction datasets of the data blocks 120 in the persistent storage of the respective communication device of the subset 11. For example, the first communication device 10₁ may store all the data blocks 120 including their respective transaction datasets in the persistent storage 28. In this case, the header data of the respective chain element of the chain elements 100 may comprise a respective address of the storage 28 specifying a storage location of the respective data block which is associated with the respective chain element.

The block hash value of the respective chain element of the blockchain 1000 is dependent on at least one respective transaction hash value. In the example shown in Figure 3, the block hash value 101₁ of the genesis chain element 100₁ may depend on various first transaction hash values 521₁, 521₂, ...521ᵢ ..., 521ₙ₁. The first transaction hash values 521₁, 521₂, ...521ᵢ ..., 521ₙ₁ may respectively be equal to a respective output value of an exemplary hash function, wherein the respective output value is a result of the exemplary hash function using a binary representation of the respective one of the first transaction datasets 121₁, 121₂, ... 121ᵢ ..., 121ₙ₁ of the first data block 120₁ as input data of the exemplary hash function respectively. The exemplary hash function may comprise the secure hash algorithm (SHA)-256.

Analogously, the block hash value 101₂ of the first chain element 100₂ of the subset 111, the block hash value 101₃ of the second chain element 100₃ of the subset 111, the block hash value 101ᵢ of the i-th chain element 100ᵢ of the blockchain 1000 and the block hash value 101ₙ of the n-th chain element 100ₙ of the blockchain 1000 may depend on second transaction hash values 621₁, 621₂, ...621ᵢ ..., 621ₙ₂, third transaction hash values 721₁, 721₂, ...721ᵢ ..., 721ₙ₃, i-th transaction hash values 821₁, 821₂, ...821ᵢ ..., 821ₙ₄ and n-th transaction hash values 921₁, 921₂, ...921ᵢ ..., 921ₙ₉ respectively.

Preferably, the second transaction hash values 621₁, 621₂, ...621ᵢ ..., 621ₙ₂, the third transaction hash values 721₁, 721₂, ...721ᵢ ..., 721ₙ₃, the i-th transaction hash values 821₁, 821₂, ...821ᵢ ..., 821ₙ₄, and n-th transaction hash values 921₁, 921₂, ...921ᵢ ..., 921ₙ₉ may respectively be equal to a respective output value of the exemplary hash function, wherein the respective output value is a result of the exemplary hash function using a binary representation of the respective one of the second transaction datasets 122₁, 122₂, ...122ᵢ ..., 122ₙ₂, the third transaction datasets 123₁, 123₂, ...123ᵢ ..., 123ₙ₃, the i-th transaction datasets 124₁, 124₂, ...124ᵢ ..., 124ₙ₄ and the n-th transaction datasets 129₁, 129₂, ...129ᵢ ..., 129ₙ₉ respectively as input data of the exemplary hash function.

According to one example, the block hash value 101₁ of the genesis chain element 100₁ may be equal to a root hash value of a Merkle tree structure 500 of the first data block 120₁, as it is shown in Figure 5. For sake of simplicity and without limitation it is assumed in the following that the number n₁ of first transaction datasets may be equal to four. The Merkle tree structure 500 may comprise a first layer of leaf nodes shown as circles in Figure 5. Each leaf node is labelled with one of the first transaction hash values 521₁, 521₂, ...521ᵢ ..., 521ₙ₁. The Merkle tree structure 500 may have non-leave nodes which are labelled with non-leaf hash values 531, 532. The non-leave nodes may be considered as a second layer of the structure 500. The non-leave hash values 531, 532 may each be a result of the exemplary hash function using a binary representation of two of the first transaction hash values 521₁, 521₂, ...521ᵢ ..., 521ₙ₁ as the input data of the exemplary hash function. The block hash value 101₁ of the genesis chain element 100₁ may be a result of the exemplary hash function using a binary representation of the two non-leaf hash values 531, 532 as the input data of the exemplary hash function.

Analogously, the block hash value 101₂ of the first chain element 100₂ of the subset 111, the block hash value 101₃ of the second chain element 100₃ of the subset 111, the block hash value 101ᵢ of the i-th chain element 100ᵢ of the blockchain 1000 and the block hash value 101ₙ of the n-th chain element 100ₙ of the blockchain 1000 may depend on the second transaction datasets 122₁, 122₂, ...122ᵢ ..., 122ₙ₂, the third transaction datasets 123₁, 123₂, ...123ᵢ ..., 123ₙ₃, the i-th transaction datasets 124₁, 124₂, ...124ᵢ ..., 124ₙ₄ and the n-th transaction datasets 129₁, 129₂, ...129ᵢ ..., 129ₙ₉ respectively. The block hash values 101₂, 101₃, 101ᵢ, 101ₙ may respectively be a root hash value of a Merkle tree structure 600 of the second data block 120₂, a Merkle tree structure 700 of the third data block 120₃, a Merkle tree structure 800 of the i-th data block 120ᵢ and a Merkle tree structure 900 of the n-th data block 120ₙ respectively.

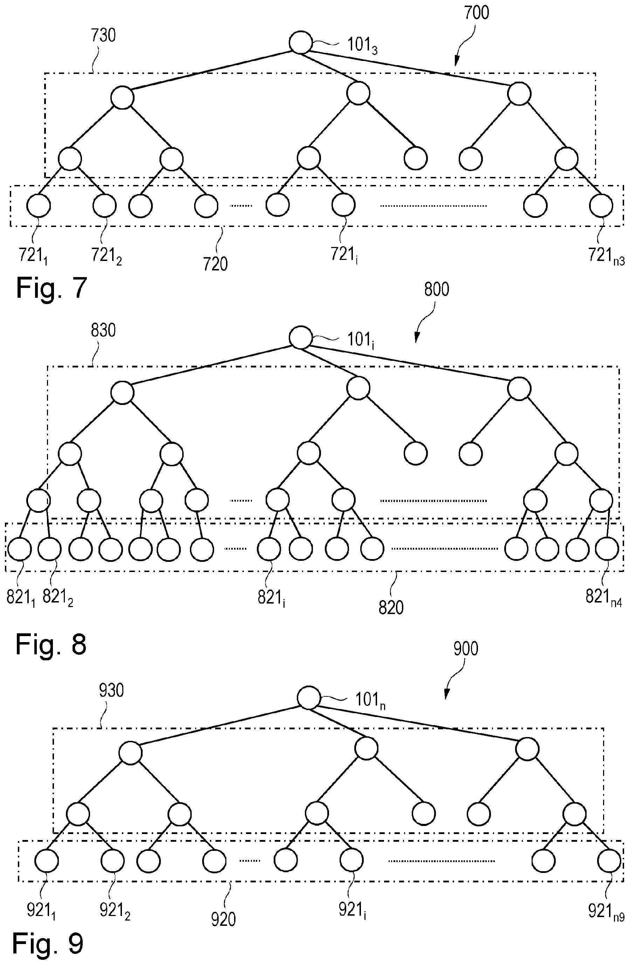

The Merkle tree structures 600, 700, 800, 900 may respectively comprise leaf nodes 620, 720, 820, 920 which are labelled by the second transaction hash values 621₁, 621₂, ...621ᵢ ..., 621ₙ₂, the third transaction hash values 721₁, 721₂, ...721ᵢ ..., 721ₙ₃, the i-th transaction hash values 821₁, 821₂, ...821ᵢ ..., 821ₙ₄ and the n-th transaction hash values 921₁, 921₂, ...921ᵢ ..., 921ₙ₉ respectively, as shown in Figure 6, 7, 8 and 9 respectively. The Merkle tree structures 600, 700, 800, 900 may respectively have non-leave nodes 630, 730, 830, 930 which are labelled with non-leave hash values which are not shown in the Figures for sake of simplicity. The non-leave hash values of the Merkle tree structures 600, 700, 800, 900 may serve respectively for calculating the respective block hash values 101₂, 101₃, 101ᵢ, 101ₙ similarly as the non-leave hash values of the Merkle tree structure 500 serve for determining the block hash value 101₁.

The chain element hash value of the respective chain element of the subset 111 is dependent on the header data of the chain element that immediately precedes the respective chain element in the blockchain 1000. Referring to the example given in Figure 3, this implies that the chain element hash value 102₁ of the first chain element 100₂ of the subset 111 may depend on the block hash value 101₁ and the time stamp 103₁ of the genesis chain element 100₁. The chain element hash value 102₂ of the second chain element 100₃ of the subset 111 may depend on the block hash value 101₂ and the time stamp 103₂ and preferably on the chain element hash value 102₁ of the first chain element 100₂ of the subset 111. Analogously, the chain element hash value 102ᵢ of the i-th chain element 100ᵢ may depend on the block hash value and the time stamp and preferably on the chain element hash value of the chain element immediately preceding the i-th chain element 100ᵢ. In one example, the chain element hash value 102₂ of the second chain element 100₃ of the subset 111 may be an output value of the exemplary or a further hash function which is determined by means of this hash function using a binary representation of the header data of the first chain element 100₃ of the subset 111.

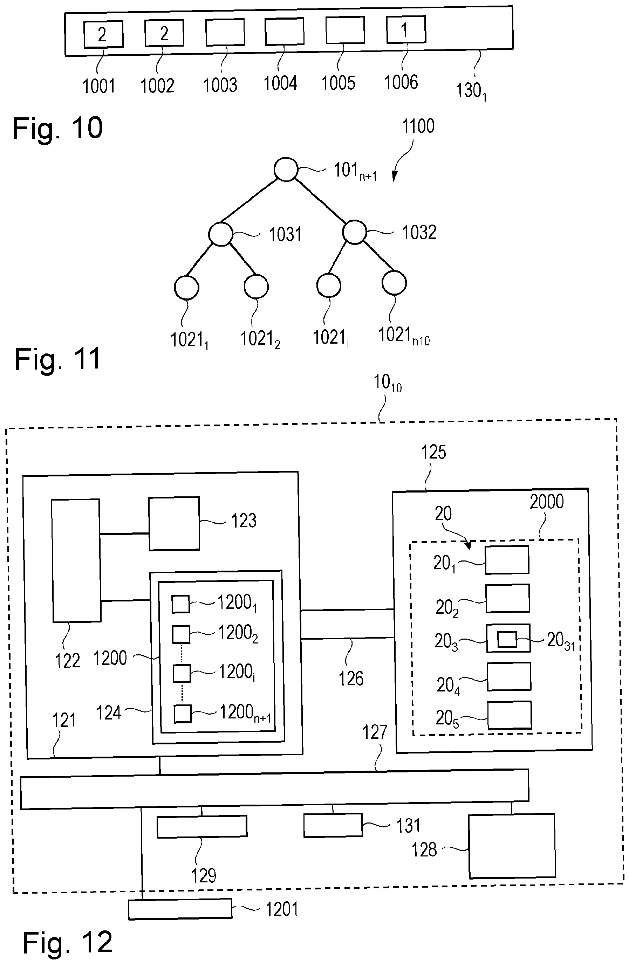

The communication system 1 may be configured to delete at least partially a selected transaction dataset of a specific data block of the data blocks 120 which comprises the selected transaction dataset. For example, the program modules 20 may comprise a deletion module 20₁. The selected transaction dataset may be specified by a deletion transaction dataset 130₁, as shown in Figure 10. The deletion transaction dataset 130₁ may comprise a block identification field 1001 for specifying one of the data blocks 120 which comprises the selected transaction dataset and a transaction dataset identification field 1002 for specifying the selected transaction dataset. In a chosen example shown in Figure 10, a value of the transaction data field 1002 is "2" and a value of the block identification field 1001 is equal to "2". Hence, the selected transaction dataset is the transaction dataset 122₂ of the second data block 120₂. Thus, the specific data block may be the second data block 120₂ in this case. Alternatively, or in addition, the deletion transaction dataset 130₁ may comprise a deletion command 1005. Alternatively, or in addition, the deletion transaction dataset 130₁ may comprise the transaction hash value 621₂ of the selected transaction dataset. This variant is not explicitly shown in Figure 10.

Preferably, one or more of the communication devices 10 may be configured to send the deletion transaction dataset 130₁ to one or more of the other communication devices 10. To realize this, the communication devices 10 may be connected among each other via their respective network adapters by means of the LAN, the WAN, and/or the public network (e.g., the internet). For instance, a second communication device 10₂ may send the deletion transaction dataset 130₁ to one or more of the other communication devices 10, for example to an eighth communication device 10₈, as shown in Figure 1.

The communication system 1 may be designed such that all of the communication devices of the subset 11 are able to receive the deletion transaction dataset 130₁. Furthermore, the communication system 1 may be configured to test whether all of the communication devices of the subset 11 have received the deletion transaction dataset 130₁.

The processor 21 may be configured to load the deletion module 20₁ and the deletion transaction dataset 130₁ into the cache memory 24 and/or the register 23 and to execute instructions of the deletion module 20₁ dependent on the deletion transaction dataset 130₁, for example the deletion command 1005, by means of the logic unit 22 and the register 23. For example, the register 23 may store a main routine comprising a command for calling the deletion module 20₁. An execution of the instructions of the deletion module 20₁ may provoke that the selected transaction dataset may be deleted at least partially in the RAM 25 and/or in the persistent storage 28. The steps for an at least partial deletion of the selected transaction dataset being performed by the processor 21 described above may be referred to as a deletion process in the following. Preferably, the respective processor of each respective communication device of the subset 11 may perform the deletion process.

The communication system 1 may be configured to store the transaction hash value of the selected transaction dataset within the communication system 1. Referring to the chosen example, wherein the selected transaction dataset is the transaction dataset 122₂, the system 1 may store the transaction hash value 621₂ before the selected transaction dataset is at least partially deleted, according to one example. The transaction hash value of the selected transaction dataset may be stored in the RAM or in the persistent storage of one or more of the communication devices 10. According to one example, the processor 21 may modify the selected transaction dataset such that the selected transaction dataset comprises only the transaction hash value 621₂ after the processor 21 has executed the deletion process. In other words, the processor 21 may be configured to overwrite the data of the selected transaction dataset with the transaction hash value 621₂ of the selected transaction dataset during the deletion process, in one example.

Furthermore, the communication devices 10 may be configured to communicate with each other in order to achieve an agreement on an addition of a further chain element 100ₙ₊₁ to the blockchain 1000.

The further chain element 100ₙ₊₁ is associated with a further data block 120ₙ₊₁. The further data block 120ₙ₊₁ comprises at least the deletion transaction dataset 130₁. In most cases, the further data block 120ₙ₊₁ may comprise further transaction datasets 130₁ ... 130ᵢ ... 130ₙ₁₀. The further transaction datasets may be stored in a transaction dataset pool 1300 of the communication system 1. The transaction dataset pool 1300 may be a storage device of a central server 1310 of the communication system 1. The deletion transaction dataset 130₁ is shown as a first transaction dataset of the further data block 120ₙ₊₁ in Figure 3. However, the deletion transaction dataset 130₁ may be any of the further transaction datasets of the further data block 120ₙ₊₁. Similar to the transaction datasets of the data blocks 120, the further transaction datasets may be designed for modifying the database 400.

One of the communication devices 10, for example the communication device 10₁₀, in the following referred to as proposing device, may be configured to determine an order of the further transaction datasets within the further data block 120ₙ₊₁ and to calculate a block hash value 101ₙ₊₁ of the further data block 120ₙ₊₁. Furthermore, the proposing device may select the further transaction datasets from a set of potential transaction datasets being stored in the storage device of the central server 1310. The proposing device may determine the order of the further transaction datasets within the further data block 120ₙ₊₁ and calculate the block hash value 101ₙ₊₁.

Figure 12 depicts the basic components of the communication device 10₁₀, such as a processor 121, a RAM 125, a memory bus 126, a system bus 127, a persistent storage 128, input/output interfaces 129, an external device 1201, a network adapter 131. The processor 121 may comprise a logic unit 122, a register 123 and a cache memory 124.

The block hash value 101ₙ₊₁ of the further data block 120ₙ₊₁ may depend on various further transaction hash values 1021₁, 1021₂, ...1021ᵢ ..., 1021ₙ₁₀. The further transaction hash values 1021₁, 1021₂, ... 1021ᵢ ..., 1021ₙ₁₀ may respectively be equal to a respective output value of the exemplary hash function, wherein the respective output value may be a result of the exemplary hash function using a binary representation of one of the further transaction datasets 130₁, 130₂, ...130ᵢ ..., 130ₙ₁₀ of the further data block 120ₙ₊₁ as input data of the exemplary hash function respectively.

The proposing device may determine the block hash value 101ₙ₊₁ in the form of a root hash value of a Merkle tree structure 1100 of the further data block 120ₙ₊₁, as shown in Figure 11. For sake of simplicity it is assumed, according to Figure 11, that a number of data transactions n₁₀ of the further data block 120ₙ₊₁ may be equal to four.

According to one example, the Merkle tree structure 1100 may comprise a first layer of leaf nodes shown as circles in Figure 11. Each leaf node is labelled with one of the further transaction hash values 1021₁, 1021₂, ...1021ᵢ ..., 1021ₙ₁₀. The Merkle tree structure 1100 may have non-leave nodes which are labelled with non-leaf hash values 1031, 1032. The non-leave nodes may be considered as a second layer of the structure 1100. The non-leave hash values 1031, 1032 may respectively be a result of the exemplary hash function using a binary representation of two of the further transaction hash values 1021₁, 1021₂, ...1021ᵢ ..., 1021ₙ₁₀ as the input data of the exemplary hash function. The block hash value 101ₙ₊₁ of the further data block 120ₙ₊₁ may be a result of the exemplary hash function using a binary representation of the two non-leaf hash values 1031, 1032 as the input data of the exemplary hash function. A RAM of the proposing device, for example the RAM 125 of the communication device 10₁₀, may store a hash function module 20₂ which comprises the exemplary hash function for determining the block hash value 101ₙ₊₁ of the further data block 120ₙ₊₁. The processor 121 may load the hash function module 20₂ into the register 123 to calculate the block hash value 101ₙ₊₁ by means of instructions of the hash function module 20₂.

Furthermore, the proposing device may be configured to determine a chain element hash value 102ₙ of the further chain element 100ₙ₊₁ which is dependent at least on the block hash value of the youngest chain element of the blockchain 1000. The youngest chain element of the blockchain 1000, according to the example shown in Figure 3, is the chain element 100ₙ. For example, the processor 121 may be configured to load the instructions of the hash function module 20₂ into the cache 124 and/or the register 123 and to execute instructions of the hash function module 20₂ in dependency on a binary representation of the header data of the youngest chain element of the blockchain 1000, here the time stamp 103ₙ, the block hash value 101ₙ and the chain element hash value 102ₙ₋₁, by means of the logic unit 122 and the register 123. In one example, the register 123 may store a further main program comprising a command for calling the hash function module 20₂. The processor 121 may determine the chain element hash value 102ₙ of the further chain element 100ₙ₊₁ by executing the instructions of the hash function module 20₂.

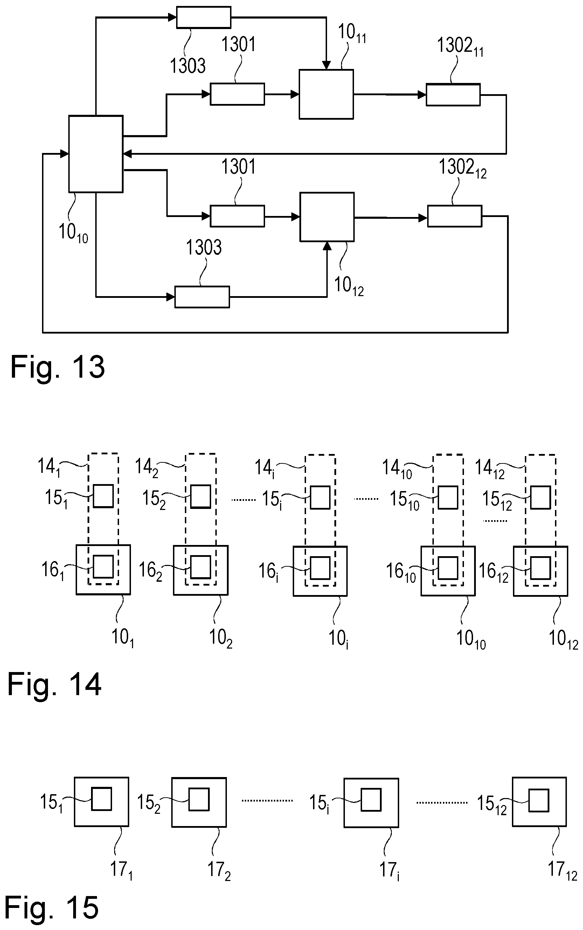

The set of communication devices 10 may comprise validation devices 41, for example the communication device 10₁₀, 10₁₁ and 10₁₂. In most cases, the validation devices 41 may comprise the proposing device, as shown in Figure 1. The proposing device may send the further chain element 100ₙ₊₁ in the form of a first message 1301 to the further validation devices, here the communication device 10₁₁ and 101₂, as shown in Figure 13. In most cases, the further chain element 100ₙ₊₁ may comprise the further data block 120ₙ₊₁. Thus, the first message 1301 may comprise the block hash value 101ₙ₊₁ of the further data block 120ₙ₊₁, the chain element hash value 102ₙ of the further chain element 100ₙ₊₁ and the further data block 120ₙ₊₁.

A subset 42 of the validation devices 41 which excludes the proposing device may be designed to test whether the further chain element 100ₙ₊₁ meets the chain element requirements, for example the communication device 10₁₁ and 10₁₂. For example, each validation device of the subset 42 may check whether the block hash value 101ₙ₊₁ of the further data block 120ₙ₊₁ and the chain element hash value 102ₙ of the further chain element 100ₙ₊₁ have been determined correctly by the proposing device and, preferably, whether the further data block 120ₙ₊₁ meets the data requirements mentioned above. Preferably, the validation devices of the subset 42 may store the hash function module 20₂ and a data block validation module 20₃ in their respective program modules. The processors of the validation devices of the subset 42 may each recalculate the block hash value 101ₙ₊₁ of the further data block 120ₙ₊₁ and the chain element hash value 102ₙ of the further chain element 100ₙ₊₁ by means of the hash function module 20₂. For performing such a recalculation, the validation devices of the subset 42 may each load the first message 1301 and the youngest chain element 100ₙ into its respective RAM

The data block validation module 20₃ is shown in Figure 12 as one of the program modules 20 of the proposing device 10₁₀. Generally, each of the validation devices 41 may be designed such that it may perform all the functions of the proposing device and all the functions of one of the devices being part of the subset 42 for testing the further chain element 100ₙ₊₁ being determined by the proposing device. A role of the proposing device may swap among the validation devices 41 with every further testing of one of any other further chain elements. The proposing device may be elected by the validation devices 41 with every repetition of proposing one of the other further chain elements. Thus, for simplicity, it may be assumed that the respective validation device of the subset 42 comprises the same basic components and modules as the proposing device 10₁₀ which are depicted in Figure 12. The respective validation device of the validation devices 41 may be connected to the central server 1310. By that and by storing the hash function module 20₂ in its respective RAM, the respective validation device of the validation devices 41 may be configured to select the further transaction datasets and to determine the order of the further transaction datasets in the further data block 120ₙ₊₁ and to build the further data block 120ₙ₊₁. The further data block 120ₙ₊₁ may be built by writing the further transaction datasets in a new data block of the cache memory and in the RAM of the proposing device. The new data block is then considered as the further data block 120ₙ₊₁.

The validation devices 41 may respectively be configured to check whether the further data block 120ₙ₊₁ meets the data requirements mentioned above using the data block validation module 20₃. For example, the data block validation module 20₃ may be designed to test whether the deletion transaction dataset 130₁ comprises explanatory data 1003 for the at least partially deletion of the selected transaction dataset. The explanatory data 1003 may comprise a reason why the selected transaction dataset is supposed to be deleted at least partially.

Each validation device of the subset 42 may individually perform a respective test whether the further chain element 100ₙ₊₁ meets the chain element requirements. If a result of the respective test is positive, i. e. the further chain element 100ₙ₊₁ meets the chain element requirements, the respective validation device of the subset 42 may validate the further chain element 100ₙ₊₁.

The communication system 1 may be configured to take a consensus state if a number or ratio of the validation devices 41, preferably a number or ratio of the validation devices of the subset 42, which have validated the further chain element 100ₙ₊₁ reaches a given threshold or a given ratio respectively and this has been detected by at least one of the communication devices 10, for example by the proposing device. The given ratio may be higher than fifty percent. The communication system 1 taking the consensus state may be considered as a state of the communication system 1 in which the agreement on the addition of the further chain element 100ₙ₊₁ to the blockchain 1000 is achieved among the validation devices 41.

In response to a respective validation of the further chain element 100ₙ₊₁ by means of the respective validation device of the subset 42, the respective validation device of the subset 42 may send a respective validation message to the proposing device. For example, the communication device 10₁₁ may send a first validation message 1302₁₁ and the communication device 101₂ may send a second validation message 1302₁₂ to the proposing device, as depicted in Figure 13.

One of the communication devices 10, preferably the proposing device, may be configured to detect that one or more of the validation devices 41 of the subset 42 have validated the further chain element 100ₙ₊₁, in the following also referred to as control device. For example, the processor 121 of the proposing device may execute a validation detection module 20₄ for counting a number of incoming validation messages. The respective validation message may comprise information about a respective sender of the respective validation message. Thus, if the control device receives a respective validation message, such as the first or second validation message 1302₁₁, 1302₁₂, then the control device may log that the respective validation device has validated the further chain element 100ₙ₊₁, in this case the communication device 10₁₁ and the communication device 10₁₂. In one example, the processor of the control device may write in a log file from which communication device the control device has received the respective validation message. The log file may be stored in the cache memory of the control device.

If a number of received validation messages reaches the given threshold, then the consensus state may be considered as being reached. The control device may check whether the number of the received validation messages reaches the given threshold. The validation devices 41 may communicate via the internet using their network adapters, for example in order to exchange the first message 1301 and the first and second validation message 1302₁₁, 1302₁₂ among each other.

The variants of the communication system 1 described above may give one example of how the communication system 1 may be configured to achieve the agreement on the addition of the further chain element 100ₙ₊₁ to the blockchain 1000. For example, the communication system 1 may be configured such that it comprises the validation devices 41 which respectively comprise the hash function module 20₂, the data block validation module 20₃ and the validation detection module 20₄. Furthermore, the validation devices 41 may comprise their network adapters and may be communicatively coupled to each other via the internet, the LAN or the WAN in order to achieve the agreement.

Furthermore, the aforementioned steps may be considered as a detailed variant of the process of agreement mentioned above. The process of agreement may be understood as an agreement method which comprises several steps. A first step of the agreement method may comprise sending the first message 1301 to the further validation devices. A last step of the agreement method may comprise checking whether the number of the received validation messages reaches the given threshold.

In response to receiving the first and second validation message 1302₁₁, 1302₁₂, the proposing device may send a consensus message 1303 to the respective validation devices of the subset 42. The consensus message 1303 contains information that the consensus state has been achieved. The respective validation devices of the subset 42 may add the further chain element 100ₙ₊₁ to its copy of the blockchain 1000 and may add the further data block 120ₙ₊₁ to the data blocks 120 in response to receiving the consensus message 1303. Analogously, the proposing device may add the further chain element 100ₙ₊₁ to its copy of the blockchain 1000 and may add the further data block 120ₙ₊₁ to the data blocks 120 in response to the consensus state being achieved.

In one example, the set of communication devices 10 may comprise a hierarchy structure. The hierarchy structure may divide the communication devices 10 into the validation devices 41 and non-validation devices. The non-validation devices may be formed by a first group of remaining communication devices of the set of communication devices 10 which are not validation devices 41. For example, the first group may comprise the communication devices 10₁, 10₂, 10₃, 10₄, 10₅, 10₆, 10₇, 10₈, 10₉.

The hierarchy structure may provide that the validation devices 41 are assigned rights to participate in the process of agreement and that the non-validation devices are not able to take part in the process of agreement. For example, the validation devices 41 may be configured to ignore or block a receiving of validation messages being sent from the non-validation devices.

According to one example, the communication devices may comprise observer devices 43. The observer devices 43 may be non-validation devices, such as the communication devices 10₇, 10₈, 10₉. The observer devices 43 may be configured to perform an examination of a request for storing the deletion transaction dataset 130₁ in the transaction dataset pool 1300 and preferably adding the deletion transaction dataset 130₁ to the further data block 120ₙ₊₁. The request may be in the form of a sending of the deletion transaction dataset 130₁ from a requesting communication device to one or more of the observer devices 43, for example to the observer device 10₈. The requesting communication device may be a communication device of a second group of the communication devices 10 which comprises the non-validation devices which are not observer devices 43, for example the communication device 10₁, 10₂, 10₃, 10₄, 10₅ or 10₆. The second group of devices may be referred to as client devices 44 in the following. Hence, the non-validation devices may be divided into the observer devices 43 and the client devices 44. Alternatively, the requesting device may be one of the validation devices 41.

The examination of the request may comprise the test whether the deletion transaction dataset 130₁ meets the data requirements mentioned above. For example, one of the observer devices 43 may test whether the deletion transaction dataset 130₁ comprises the explanatory data 1003 for the at least partially deletion of the selected transaction dataset. The observer devices 43 may comprise the data block validation module 20₃. The data block validation module 20₃ may comprise a recognition module 20₃₁ for recognizing a content given by the explanatory data 1003 as a valid reason for the deletion of the selected transaction dataset on the basis of the explanatory data 1003. In one example, the data block validation module 20₃ may comprise a list of valid reasons for deleting one or more of the transaction datasets of the data blocks 120. Alternatively, or in addition, the recognition module 20₃₁ may be an artificial intelligence module for recognizing the content of the explanatory data 1003 as one of the valid reasons for deleting at least partially the selected transaction dataset on the basis of the explanatory data 1003.

If the deletion transaction dataset 130₁ meets the data requirements, then the one of the observer devices 43 which performs the examination of the request may approve the deletion transaction dataset 130₁ and may send it to the central server 1310. The central server 1310 may store the deletion transaction dataset 130₁ in the transaction dataset pool 1300. The client devices 44 may only communicate with the validation devices 41 indirectly via the observer devices 43, and preferably via the central server 1310. In other words, the communication system 1 may be configured to block a direct communication between the client devices 44 and the validation devices 41. For example, the client device 10₅ may send the deletion transaction dataset 130₁ to the observer device 10₈. In response to an approval of the deletion transaction dataset 130₁, the observer device 10₈ may send the deletion transaction dataset 130₁ to one of the validation devices 41 or the central server 1310. If the observer device 10₈ may not approve the deletion transaction dataset 130₁ then it may not send the deletion transaction dataset 130₁ to any of the validation devices 41 nor the central server 1310. Thus, the observer devices 43 may form a gate 1800 for new transaction datasets sent and/or generated by the client devices 44 and which are supposed to be added to the blockchain 1000.

The examination of the request may further comprise checking whether the requesting device is one of the communication devices 10. Generally, it may be possible that the requesting device is an external communication device. In most cases, the requesting device may be a certified communication device and one of the communication devices 10, for example one of the client devices 44 or validation devices 41. This may enhance a trust in the deletion process.

In the following it is assumed that one of the communication devices 10 may perform the second part of the synchronization process mentioned above, in the following referred to as synchronization device. The synchronization device may perform the second part of the synchronization process, i. e. the verification of the blockchain, after the further chain element 100ₙ₊₁ has been added to the blockchain 1000 and after the further chain element 100ₙ₊₁ has been added to the copies of the blockchain 1000. It may be possible that the synchronization device has recently joined the communication system 1.

The synchronization device may be one of the client devices 44, for example the communication device 10₁ or 10₂, one of the observer devices 43 or the validation devices 41. The synchronization device may comprise a synchronization module 20₅ which may be stored in the RAM of the synchronization device. The processor of the synchronization device, in the following also referred to as synchronization processor, may execute instructions of the synchronization module 20₅. This may provoke a downloading of the data blocks 120 and the further data block 120ₙ₊₁ and the blockchain 1000 including the chain elements 100 and the further chain element 100ₙ₊₁ from the RAM and/or the persistent storage of one of the validation devices 41 or of the observer devices 43, for example the communication device 10₁₀ or 10₇, to the RAM and/or persistent storage of the synchronization device.

The communication device 10₁₀ or 10₇ may send the data blocks 120 and the further data block 120ₙ₊₁ and the blockchain 1000 by means of a synchronization package 1500 to the synchronization device. Thus, the synchronization package 1500 may comprise the data blocks 120 and the further data block 120ₙ₊₁ and the blockchain 1000. However, according to one example, the synchronization package may only comprise the blockchain 1000. The blockchain 1000 may comprise the chain elements of the subset 111 and the further chain element 100ₙ₊₁. According to one example, the synchronization package 1500 may be sent from one of the observer devices 43 to the synchronization device. In this case, one of the validation devices 43 may send the synchronization package 1500 to one or more of the observer devices 43 in response to adding the further chain element 100ₙ₊₁ to the blockchain 1000. By that, a data traffic between the client devices and the validation devices may be reduced.

The synchronization device may perform the similar steps as the exemplary communication device mentioned above in order to perform the verification of the blockchain. For example, the synchronization device may recalculate the respective transaction hash values of the transaction datasets of the downloaded data blocks 120 and the further data block 120ₙ₊₁. In order to realize this, the synchronization processor may determine the respective transaction hash values 521₁, 521₂, ...521ᵢ ..., 521ₙ₁, 621₁, ...621ᵢ ..., 621ₙ₂, 721₁, 721₂, ...721ᵢ ..., 721ₙ₃, 821₁, 821₂, ...821ᵢ ..., 821ₙ₄, 921₁, 921₂, ...921ᵢ ..., 921ₙ₉, 1021₁, 1021₂, ...1021ᵢ ..., 1021ₙ₁₀ of the respective transaction datasets 121₁, 121₂, ..121ᵢ ..., 121ₙ₁, 122₁, ...122ᵢ ..., 122ₙ₂, 123₁, 123₂, ...123ᵢ ..., 123ₙ₃, 124₁, 124₂, ...124ᵢ ..., 124ₙ₄, 129₁, 129₂, ...129ᵢ ..., 129ₙ₉, 130₁, 130₂, ...130ᵢ ..., 130ₙ₁₀, 131₁, 131₂, ...131ᵢ ..., 131ₙ₁₁ of the loaded data blocks 120 and the further data block 120ₙ₊₁ by using the hash function module 20₂ and the respective binary representation of the respective transaction dataset of the loaded data blocks 120 and the further data block 120ₙ₊₁ as the input data of the hash function.

As the transaction dataset 122₂, i. e. the selected transaction dataset according to the chosen example, is at least partially deleted, the synchronization processor may read in the stored transaction hash value 621₂ of the selected transaction dataset instead of calculating this hash value. According to one example, the synchronization processor may read in the stored transaction hash value 621₂ of the selected transaction dataset in the form of the data of the transaction dataset 122₂ from the RAM of the synchronization device into the cache memory of the synchronization device. The synchronization processor may store the respective transaction hash values of the respective transaction datasets which are determined by means of the hash function module 20₂ in this cache memory as well.

The synchronization processor may set a marker in response to recognizing the data of the transaction dataset 122₂ as a hash value. For example, the synchronization processor may determine a size of the data of the selected transaction dataset and compare this size with a given size. The given size may be equal to 256 bits. If the size of the data of the selected transaction dataset is equal to the given size, then the synchronization processor may recognize the data of the transaction dataset 122₂ as a hash value and set the marker, according to the example. The marker being set may provide information for identifying the second data block 120₂ as the specific data block which comprises the selected transaction dataset.

For example, the marker may be in the form of an element of a list 1200 with elements. The list 1200 may be designed as an array. Each element 1200ᵢ of the list 1200 may be associated with one of the data blocks of the downloaded data blocks 120 or the further data block 120ₙ₊₁. According to the example given above, the second data block 120₂ is the specific data block. Thus, the synchronization processor may set a second element 1200₂ of the elements of the list 1200 equal to "one". According to this example, the marker may be the second element 1200₂. The list 1200 may be stored in the cache memory of the synchronization device and may have a length being equal to the number of the data blocks of the blockchain, here "n+1". The elements 1200₁, 1200₂, ...1200ᵢ, ... , 1200ₙ₊₁ of the list 1200 may be equal to "zero" at a point of time when the synchronization device starts the verification of the blockchain.

Each element of the list 1200 may be considered as a respective marker of one of the data blocks of the downloaded data blocks 120 or the further data block 120ₙ₊₁. In one example and in the following, the respective markers are considered being set if their respective value is equal to "one". This list 1200 is shown as being stored in the cache memory of the first communication device 10₁ for sake of simplicity and in order not to draw the basic components of the communication device 10₂. It is assumed that these basic components are similar to the basic components of first communication device 10₁. As anyone of the communication devices 10 may be the synchronization device, each communication device 10 may store the list 1200 when verifying the blockchain 1000, in one example.

The communication device 10₁ and/or the communication device 10₂ may be configured to set the marker 1200₂ for specifying the specific data block 120₂ or the selected transaction dataset 122₂ or the chain element 100₂ which is associated with the specific data block 120₂. Furthermore, the communication device 10₁ and/or the communication device 10₂ may be configured to verify the chain element 100₂ which is associated with the specific data block 120₂ by means of the marker 1200₂ and the deletion transaction dataset 130₁.

The synchronization processor may recalculate respective non-leaf hash values, including the non-leaf hash values 531, 532, 630, 730, 830, 930, 1031, 1032, of the Merkle tree structure of each of the respective data blocks 120 and the further data block 120ₙ₊₁, including the Merkle tree structure 500, 600, 700, 800, 900 and 1100 respectively, by executing the hash function module 20₂ and using a respective input string of the hash function module 20₂ which is formed by the concatenation of the at least two transaction hash values of the transaction datasets of the respective data block of the data blocks 120 or the further data block 120ₙ₊₁ respectively. One of the respective input strings of the hash function module 20₂ may be formed by the concatenation of the stored transaction hash value 621₂ of the selected transaction dataset and one further transaction hash value of one of the transaction datasets of the specific data block, for example the transaction hash value 621₁. The synchronization processor may calculate one of the non-leaf hash values 630, for example the one shown as a circle being connected with the stored transaction hash value 621₂ and the transaction hash value 621₁ of the structure 600, based on this input string using the hash function module 20₂.

Furthermore, the synchronization processor may recalculate the root hash value of the Merkle tree structure of the respective data block of the data blocks 120 and the further data block 120ₙ₊₁ or its associated chain element using the hash function module 20₂ and a respective further input string. The respective further input string may be formed by a concatenation of two or more non-leaf hash values of the highest layer of the non-leaf nodes of the Merkle tree structure of the respective data block of the data blocks 120 and the further data block 120ₙ₊₁, including the Merkle tree structure 500, 600, 700, 800, 900 and 1100, as the input data of the hash function module 20₂. The synchronization processor may store the respective root hash value of the Merkle tree structure of the respective data block of the data blocks 120 and the further data block 120ₙ₊₁ as a respective test block hash value of the respective data block of the data blocks 120 and the further data block 120ₙ₊₁.

The synchronization processor may compare the respective test block hash value with the respective block hash value 101₁, 101₂, 101₃, 101ᵢ, 101ₙ, 101ₙ₊₁ of the respective loaded chain element 100₁, 100₂, 100₃, 100₁, 100ₙ, 100ₙ₊₁. If the respective test block hash value is equal to the block hash value of the respective loaded chain element 101₂, 101₃, 101ᵢ, 101ₙ, 101ₙ₊₁, then the synchronization processor may assign a temporarily verified status to the respective data block 120₁, 120₂, 120₃, 120ᵢ, 120ₙ, 120ₙ₊₁ being associated with this respective chain element 100₁, 100₂, 100₃, 100₁, 100ₙ, 100ₙ₊₁.

In response to assigning the temporarily verified status to the respective data block 120₁, 120₂, 120₃, 120ᵢ, 120ₙ, 120ₙ₊₁, the synchronization processor may test whether the respective marker of each data block of the data blocks 120₁, 120₂, 120₃, 120ᵢ, 120ₙ, 120ₙ₊₁ is set or not. In case, the respective marker of one of the data blocks 120₁, 120₂, 120₃, 120ᵢ, 120ₙ, 120ₙ₊₁ is not set, the synchronization device may assign a fully verified status to the respective data block 120₁, 120₂, 120₃, 120ᵢ, 120ₙ, 120ₙ₊₁. In case, the respective marker of one of the data blocks 120₁, 120₂, 120₃, 120ᵢ, 120ₙ, 120ₙ₊₁ is set, the synchronization device may keep the status of the respective data block 120₁, 120₂, 120₃, 120ᵢ, 120ₙ, 120ₙ₊₁ as a temporarily verified status. Referring to the example chosen above, the synchronization device may assign a fully verified status to the data blocks 120₁, 120₃, 120ᵢ, 120ₙ, 120ₙ₊₁ and keep the temporarily verified status of the second data block 120₂ because the second element 1200₂ of the list 1200 is set.

Furthermore, the synchronization processor may perform a verification of the chain element hash values 102₂, 102₃, 102ᵢ, 102ₙ, 102ₙ₊₁ of the loaded chain elements 100₂, 100₃, 100ᵢ, 100ₙ, 100ₙ₊₁. The loaded chain elements may comprise the chain elements of the subset 111 and the further chain element 100ₙ₊₁. The synchronization processor may calculate a respective test chain element hash value for each chain element 100₂, 100₃, 100₁, 100ₙ, 100ₙ₊₁. For example, the synchronization processor may determine the test chain element hash value of each chain element 100₂, 100₃, 100₁, 100ₙ, 100ₙ₊₁ by executing the hash function module 20₂ using a binary representation of the header data of one of the respective chain elements 100₁, 100₂, 100ᵢ₋₁, 100ₙ₋₁, 100ₙ preceding the respective chain element 100₂, 100₃, 100₁, 100ₙ, 100ₙ₊₁ as the input data of the hash function module 20₂.

The synchronization processor may compare the respective test chain element hash value with the chain element hash value 102₂, 102₃, 102ᵢ, 102ₙ, 102ₙ₊₁ of the respective chain element 100₂, 100₃, 100₁, 100ₙ, 100ₙ₊₁. If the respective test chain element hash value is equal to the respective chain element hash value 102₂, 102₃, 102ᵢ, 102ₙ, 102ₙ₊₁ of the respective loaded chain element 100₂, 100₃, 100₁, 100ₙ, 100ₙ₊₁, then the synchronization processor may assign a completely verified status to the respective chain element 100₂, 100₃, 100₁, 100ₙ, 100ₙ₊₁, unless the respective data block of the data blocks 120₂, 120₃, 120ᵢ, 120ₙ, 120ₙ₊₁ which is associated with the respective loaded chain element 100₂, 100₃, 100₁, 100ₙ, 100ₙ₊₁ comprises a temporarily verified status. In the latter case, the synchronization device may assign a temporarily verified status to the chain element which is associated with the data block of the data blocks 120₂, 120₃, 120ᵢ, 120ₙ, 120ₙ₊₁ which comprises a temporarily verified status. Referring to the chosen example, the synchronization device may assign a temporarily verified status to the second chain element 100₂ and a completely verified status to the remaining chain elements 100₃, 100₁, 100ₙ, 100ₙ₊₁. The synchronization processor may assign a completely verified status to the genesis chain element 100ᵢ if the first data block 120₁ has a completely verified status. The chain element of the chain elements 100 which comprises the specific data block, in the example according to the figures the second chain element 100₂, may also be referred to as specific chain element in the following.

The synchronization device may test whether one of the transaction datasets of the data blocks 120₁, 120₂, 120₃, 120ᵢ, 120ₙ, 120ₙ₊₁ is the deletion transaction dataset 130₁ when performing the data block verification. According to one example, the transaction datasets may respectively comprise a dataset identifier which may identify the respective transaction dataset as a deletion transaction dataset or a non-deletion transaction dataset. For example, the dataset identifier may be in the form of an identification field 1006 having a value of either "one" or "zero", as shown in Figure 10. A value of "one" of the dataset identifier of the respective transaction dataset may identify the respective transaction dataset as a deletion transaction dataset.

The synchronization device may recognize the deletion transaction dataset 130₁ on the basis of the value of the dataset identifier, the deletion command 1005 and/or the stored transaction hash value 621₂ of the deletion transaction dataset 130₁. In response to recognizing the deletion transaction dataset 130₁ as a deletion transaction dataset, the synchronization device may test whether the data of the deletion transaction dataset 130₁ matches the information provided by one of the markers of the data blocks 120₁, 120₂, 120₃, 120ᵢ, 120ₙ, 120ₙ₊₁.

Given the example described above, the synchronization processor may check whether the value of the block identification field 1001 is equal to an element index of that element of the list 1200 which is set equal to "one". If this condition is fulfilled, then the data of the deletion transaction dataset 130₁ matches the information provided by one of the markers of the data blocks 120₁, 120₂, 120₃, 120ᵢ, 120ₙ, 120ₙ₊₁ and the synchronization processor may assign a completely verified status to the specific data block. Referring to the chosen example, the synchronization processor may test whether the value of "2" is equal to an element index of that element of the list 1200 which is set equal to "one", here the element 1200₂. As the element index of the element 1200₂ is "2", this condition is fulfilled, in this example. Thus, the synchronization processor may assign a completely verified status to the second data block 120₂.

In response to assigning the completely verified status to the specific data block, the synchronization processor may assign a completely verified status to the specific chain element if the specific chain element is in the temporarily verified status. Referring to the given example, the synchronization processor may assign a completely verified status to the second chain element 100₂ in response to assigning the completely verified status to the second data block 120₂. If all the chain elements of the blockchain 1000 comprise a completely verified status, then the blockchain 1000 can be considered as being verified by the synchronization device.

In one example, the synchronization processor may only assign the completely verified status to the specific chain element if the specific chain element is in the temporarily verified status and the further chain element 100ₙ₊₁ comprises the verified status.

The steps and/or configurations of the communication system 1 described above may describe one example of how the marker which is associated with the specific data block, the stored transaction hash value 621₂ of the selected transaction dataset and the deletion transaction dataset 130₁ may be used to verify the specific data block and how to verify a specific chain element, here the second chain element 100₂, which is associated with the specific data block. Furthermore, the aforementioned steps and/or configurations of the communication system 1 may describe an exemplary usage of the communication system 1, wherein the usage comprises verifying the blockchain 1000 including the further chain element 100ₙ₊₁ by means of the stored transaction hash value 621₂ of the selected transaction dataset.

However, other applications may also be used to verify the specific chain element which is associated with the specific data block using the marker and the deletion transaction dataset 130₁.

For example, the synchronization device does not need to assign the temporarily verified and the completely verified status to each data block explicitly. According to a simple example, the elements of the list 1200 may be set to "one" initially. Each element of the list 1200 may represent a respective marker of one of the data blocks and may be set to "zero" if the test block hash value of the respective data block of the data blocks 120 and the further data block 120ₙ₊₁ matches the block hash value of the respective data block. However, the marker of the specific data block may not be set to "zero" if the synchronization processor may recognize the data of the transaction dataset 122₂ as a hash value. The marker of the specific data block may be set equal to "zero" if the information given by the marker matches the information given by the deletion transaction dataset 130₁ in response to testing this condition. If all the elements of the list 1200 are set to "zero", then all data blocks may be considered as being verified.

In case the synchronization package 1500 comprises the data blocks 120 and the further data block 120ₙ₊₁, the synchronization device may perform the aforementioned first part of the synchronization process similarly to the abovementioned single communication device. Performing the first part of the synchronization process may involve running the synchronization processor dependent on the transaction datasets of the data blocks 120 and the further data block 120ₙ₊₁. The synchronization processor may modify the database 400 based on the transaction datasets of the data blocks 120 according to an order of the chain elements within the blockchain 1000, as shown in Figure 3. Thus, the synchronization processor may execute database commands which may be processed in response to reading the transaction datasets of the data blocks 120.

This may imply that the synchronization processor uses the modification data, for example the new value of the modification data, of the respective transaction dataset of each data block of the data blocks 120 and the further data block 120ₙ₊₁ for modifying the database 400. Preferably, the synchronization processor may modify the database 400 according to an order of the transaction datasets within each data block of the data blocks 120 and the further data block 120ₙ₊₁, as shown in Figure 3. For example, the synchronization processor may write the new value of the respective modification data in the respective selected matrix element of the matrix elements 40ᵢⱼ which is specified by the respective row number and column number of the respective modification data. This may provoke the database 400 to be successively modified by the synchronization processor according to the order of the chain elements of the blockchain 1000. After the synchronization device has processed all transaction datasets of the data blocks 120 and the further data block 120ₙ₊₁, the database 400 may be in an updated state. The first part of the synchronization process may be considered as being completed in this case.

In one example, the synchronization device may store a database hash value of the database 400 in its RAM or persistent storage. The database hash value of the database 400 may be an output value of the exemplary hash function being calculated by means of the exemplary hash function using a binary representation of all the content elements of the database 400 as the input data of the exemplary hash function.

According to one example, each of the communication devices 10 may perform the first and/or second part of the synchronization process in similarly to the synchronization device, preferably in response to having achieved the agreement on the addition of the further chain element 100ₙ₊₁ to the blockchain 1000. By performing the first part of the synchronization process, preferably on the basis of the synchronization package 1500, each communication device of the communication devices 10 may generate a respective database which may be considered as a respective copy of the database 400, wherein the database 400 comprises the updated state. Each communication device of the communication devices 10 may store the respective database, preferably on the persistent storage of the respective communication device.

In one example, each communication device of the communication devices 10 may generate and store a respective database hash value of its respective database. The database hash value of each communication device of the devices 10 may be compared with the database hash value of the database 400. For example, each communication device of the communication devices 10 except from the synchronization device may send the database hash value of the respective database of that communication device to the synchronization device. The synchronization device may check whether the database hash value of the database of each communication device of the devices 10 is equal to the database hash value of the database 400. If this is the case, it may be assumed that the selected transaction dataset has been deleted on every copy of the blockchain 1000 within the communication system 1.

In one example, the synchronization processor may store identification data for identifying the content element of the database 400 which is specified by the modification data of the selected transaction dataset, in the following also referred to as specific content element. The synchronization processor may store the identification data in response to setting the marker. When performing the first part of the synchronization process, the synchronization processor may check whether any modification data of one of the transaction datasets of the data blocks 120 which follows the selected transaction dataset within the blockchain 1000, and preferably which follows the selected transaction dataset within the specific data block, which comprises the selected transaction dataset, matches the identification data. If this is the case, the synchronization processor may output a warning signal and/or may assign a non-valid status to the blockchain 1000. Matching the identification data may comprise using a value of the specific content element, in one example.

The synchronization processor may output the warning signal if the modification data which matches the identification data comprises an algorithm which defines the new value of the specific content element or of any other content element of the content elements of the database 400 on the basis of an actual value of the specific content element. The warning signal may provoke an abortion of the synchronization process. By that, it may be prevented that the at least partial deletion of the selected transaction dataset may cause an incorrect determination of the content elements of the database 400.

The communication system 1 may comprise pairs of encryption keys, as shown in Figure 14. The pairs of encryption keys may respectively be associated to one of the communication devices 10. In Figure 14 a first pair of encryption keys 14₁, a second pair of encryption keys 14₂, ... an i-th pair of encryption keys 14ᵢ ... , a tenth pair of encryption keys 14₁₀ and a twelfth pair of encryption keys 14₁₂ are shown and may be associated with the first communication device 10₁, the second communication device 10₂, ... the i-th communication device 10ᵢ... , the tenth communication device 10₁₀ and the twelfth communication device 10₁₂ respectively. The pairs of encryption keys 14₁, 14₂, ... 14ᵢ, ... 14₁₀, 14₁₂ comprise each a respective private key 16₁, 16₂, ... 16ᵢ, ... 16₁₀, 16₁₂ and a respective public key 15₁, 15₂, ... 15ᵢ, ... 15₁₀, 15₁₂. The private keys 16₁, 16₂, 16ᵢ, 16₁₀, 16₁₂ of the pairs of encryption keys 14₁, 14₂, 14ᵢ, 14₁₀, 14₁₂ may respectively be stored on one of the storage devices, for example in the RAM and/or the persistent storage, of the respective communication device 10₁, 10₂, 10ᵢ, 10₁₀, 10₁₂, as shown in Figure 14. The public keys 15₁, 15₂, 15ᵢ, 15₁₀, 15₁₂ of the pairs of encryption keys 14₁, 14₂, 14ᵢ, 14₁₀, 14₁₂ may be stored on the central server 1310.

In one example, the communication system 1 may comprise digital certificates, wherein the digital certificates respectively are associated with one of the communication devices 10 and comprise the public key of this associated communication device. Figure 15 depicts exemplarily digital certificates 17₁, 17₂, 17ᵢ, 17₁₂ which may respectively comprise the respective public key 15₁, 15₂, 15ᵢ, 15₁₂ which is associated with the respective communication device 10₁, 10₂, 10ᵢ, 10₁₂. The digital certificates 17₁, 17₂, 17ᵢ, 17₁₂ may comprise further information about the respective digital certificate 17₁, 17₂, 17ᵢ, 17₁₂. The further information may comprise information for identifying a respective issuer of the respective digital certificate 17₁, 17₂, 17ᵢ, 17₁₂ and the respective communication device 10₁, 10₂, 10ᵢ, 10₁₂ which is associated with the respective digital certificate 17₁, 17₂, 17ᵢ, 17₁₂. In one example, the respective issuer of the respective digital certificate 17₁, 17₂, 17ᵢ, 17₁₂ which is associated with one of the non-validation devices may be one of the validation devices 41. According to this example, the public keys of the non-validation devices may be certified by at least one of the validation devices 41. According to a further example, the public keys of the non-validation devices may be certified by two or more validation devices 41. In another example, the respective issuer of the respective digital certificate 17₁, 17₂, 17ᵢ, 17₁₂ may be an external device not shown in the Figures. The external device may be a computing device of a state institution.

The digital certificates may be stored on the central server 1310. In one example, several of the transaction datasets of the data blocks 120 may respectively comprise one of the digital certificates 17₁, 17₂, 17ᵢ, 17₁₂. Thus, the respective modification data of these several transaction datasets may respectively comprise one of the digital certificates 17₁, 17₂, 17ᵢ, 17₁₂. According to one example, the synchronization device may use the data blocks 120 to control whether the communication device 10₇ uses a valid pair of encryption keys in response to a receiving of the synchronization package 1500 from the communication device 10₇. In this case, the synchronization package 1500 may be signed by means of the private key of the communication device 10₇. Such a control may be useful in case the digital certificates are not stored on the central server 1310 and the public keys have to be downloaded from an external source or from the communication device 10₇. The external source may not be comprised by the communication system 1.

In one example, the deletion transaction dataset 130₁ may comprise a digital signature 1004 which is generated by means of at least one of the private keys 16₁, 16₂, ...16ᵢ, ... 16₁₂. In this disclosure the expression ", xyᵢ," has the same meaning as the expression ", ... xyᵢ, ...". For example, the digital signature 1004 may be generated by means of one of the private keys, for example the private key 16₁₂, of the validation devices 41. According to one example, the proposing device may generate the digital signature 1004 by signing a control string, for example the phrase "validated", by means of the private key of the proposing device. Referring to the example above, wherein the proposing device may be the communication device 10₁₀, the control string may be signed by using the private key 16₁₀. Preferably, the proposing device may generate the digital signature 1004 in response to a test whether the deletion transaction dataset 130₁ fulfills the data requirements. This may enhance the trust in the deletion process.

In one example, the deletion transaction dataset 130₁ may comprise two or more digital signatures. A respective validation device of the validation devices 41 may generate one of these digital signatures by means of the private key of the respective validation device. According to this example, the respective validation device may generate the respective digital signature in response to a respective test whether the deletion transaction dataset 130₁ fulfills the data requirements. This may further enhance the trust in the deletion process. In one example, the respective validation device may generate the respective digital signature by signing the deletion transaction dataset 130₁.

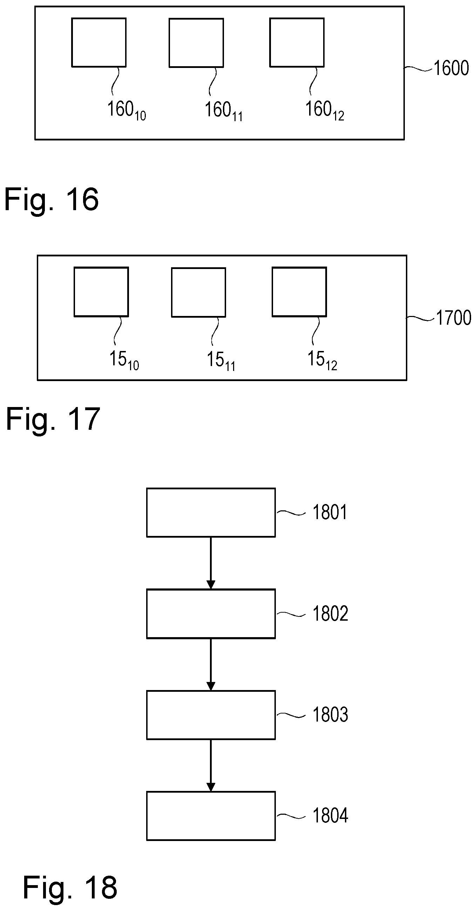

In one example, the blockchain 1000, particularly one of the transaction datasets of the data blocks 120, may comprise a root certificate 1600, shown in Figure 16. The root certificate 1600 may comprise digital root signatures 160₁₀, 160₁₁, 160₁₂. The digital root signatures 160₁₀, 160₁₁, 160₁₂ may respectively correspond to one of the validation devices 10₁₀, 10₁₁, 10₁₂ and may be each a respective digital signature of an arrangement 1700 of the public keys 15₁₀, 15₁₁, 15₁₂ of the validation devices 10₁₀, 10₁₁, 10₁₂, as shown in Figure 17. The arrangement 1700 is shown as a list to give an example for the arrangement 1700. The respective digital root signature 160₁₀, 160₁₁, 160₁₂ may be generated by means of the private key 16₁₀, 16₁₁, 16₁₂ of the respective validation device 10₁₀, 10₁₁, 10₁₂ which corresponds to the respective digital root signature 160₁₀, 160₁₁, 160₁₂. The genesis chain element 100₁ may comprise the root certificate 1600. In one example, shown in Figure 3, the modification data of the first transaction dataset 121₁ of the genesis chain element 100₁ may comprise the root certificate 1600.

In one example, the public keys of the client devices 10₁, 10₂, 10₃, 10₄, 10₅, 10₆ may respectively be certified by at least one of the observer devices 43 and the public keys of the observer devices 43 may respectively be certified by at least one of the validation devices 41.

One of the transaction datasets, for example the first transaction dataset 122₁, of the second chain element 100₂ may comprise a first further digital certificate which comprises a first further digital signature generated by means of one of the private keys of the validation devices 41. The first further digital signature may be a signature of one of the public keys of the observer devices 10₇, 10₈, 10₉. In one example, the first further digital signature may be a signature of an arrangement, for example a first further list, of the public keys of the observer devices 10₇, 10₈, 10₉.

One of the transaction datasets, for example the first transaction dataset 123₁, of the third chain element 100₃ may comprise a second further digital certificate which comprises a second further digital signature generated by means of one of the private keys of the observer devices 43. The second further digital signature may be a signature of one of the public keys of the client devices 10₁, 10₂, 10₃, 10₄, 10₅, 10₆. In one example, the second further digital signature may be a signature of an arrangement, for example a second further list, of the public keys of the client devices 10₁, 10₂, 10₃, 10₄, 10₅, 10₆. According to this example, the first transaction datasets of the first, second and third chain element 100₁, 100₂, 100₃, may provide a chain of trust. The chain of trust may represent on the one hand that the observer device which generated the second digital signature may trust the client device being associated with the respective signed public key of this client device. On the other hand, the chain of trust may represent that the validation device which generated the first digital signature may trust the observer device being associated with the respective signed public key of this observer device.

Figure 18 depicts a flowchart of a computer-implemented method for processing the selected transaction dataset by means of the communication system 1.

In step 1801, the at least partially deletion of the selected transaction dataset of the specific data block of the data blocks 120 may be performed. This may be realized by performing the deletion process as described above.

In step 1802, the transaction hash value 621₂ of the selected transaction dataset may be stored within the communication system 1. The transaction hash value 621₂ may be stored within the communication system 1 according to one of the variants described above, for example in the form of the modification data of the selected transaction dataset within the specific data block.

In step 1803, a communication among the communication devices 10 may be performed in order to achieve the agreement on the addition of the further chain element 100ₙ₊₁ to the blockchain 1000. The communication among the communication devices 10 may comprise any of the aforementioned forms of interaction between the communication devices 10 when performing any of the abovementioned variants of the process of achieving the agreement. For example, this communication may comprise sending the first message 1301 from the proposing device to the further validation devices and sending the validation messages from the further validation devices to the proposing device, for example the first validation message 1302₁₁ and the second validation message 1302₁₂. The step 1803 may comprise adding the further chain element 100ₙ₊₁ to the blockchain 1000 in response to achieving the agreement.

The method according to the flowchart may comprise a further step 1804. The further step 1804 may comprise verifying the blockchain 1000 including the further chain element 100ₙ₊₁ by means of the stored transaction hash value 621₂ of the selected transaction dataset. According to one variant, the blockchain 1000 may be verified according to the examples given above. This variant may comprise verifying the specific chain element using the marker and the deletion transaction dataset 130₁ as described above. In one example, this variant may comprise performing the data block verification and the chain element verification described above.

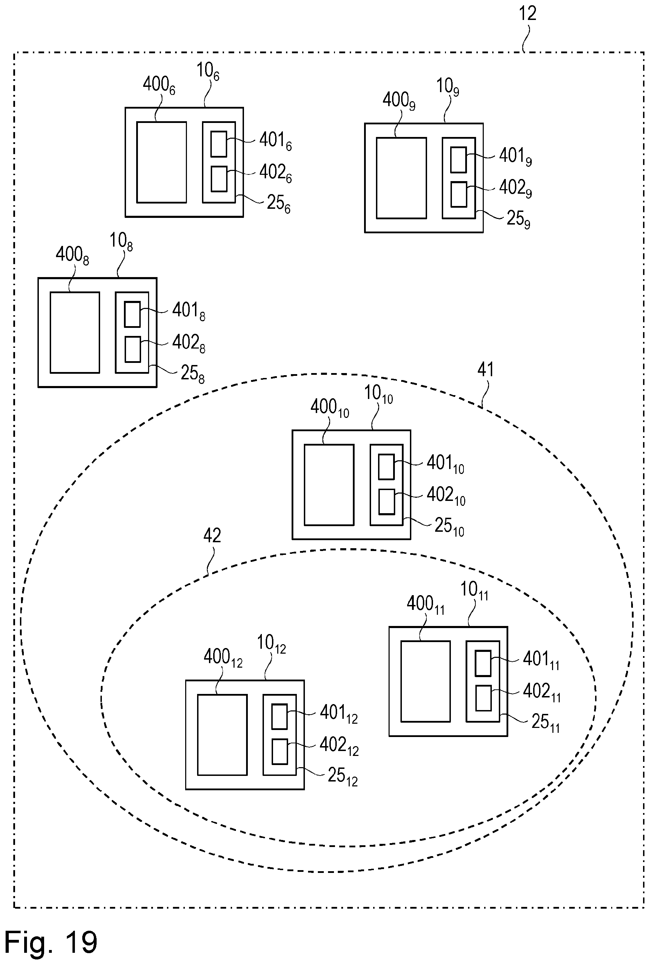

In one example, the set of communication devices 10 may comprise a further subset 12 of the communication devices 10, as shown in Figure 19 and Figure 1. The further subset 12 may comprise all communication devices of the set of communication devices 10 which store a respective copy of the data blocks 120 and the further data block 120ₙ₊₁. In one example, the method may further comprise performing a respective at least partially deletion of the selected transaction dataset of the specific data block of each copy of the data blocks 120. In one example, the further subset 12 may be equal to the subset 11, though this may not necessarily be the case.

Figure 19 depicts an application of the communication system 1, in which the communication devices of the further subset 12, here the communication devices 10₁₀, 10₁₁, 10₁₂, 10₆, 10₈, 10₉, may each comprise a respective database 400₁₀, 400₁₁, 400₁₂, 400₆, 400₈, 400₉. The processor of the respective communication device 10₁₀, 10₁₁, 10₁₂, 10₆, 10₈, 10₉ may respectively execute the transaction datasets of the data blocks 120 and the further data block 120ₙ₊₁ one after the other following the order of the chain elements prescribed by the blockchain 1000 in order to generate the database 400₁₀, 400₁₁, 400₁₂, 400₆, 400₈, 400₉ of the respective communication device 10₁₀, 10₁₁, 10₁₂, 10₆, 10₈, 10₉. The method may further comprise determining a respective database hash value 401₁₀, 401₁₁, 401₁₂, 401₆, 401₈, 401₉ of the database 400₁₀, 400₁₁, 400₁₂, 400₆, 400₈, 400₉ of the respective communication device 10₁₀, 10₁₁, 10₁₂, 10₆, 10₈, 10₉. The processor of the respective communication device 10₁₀, 10₁₁, 10₁₂, 10₆, 10₈, 10₉ may respectively calculate the respective database hash value 401₁₀, 401₁₁, 401₁₂, 401₆, 401₈, 401₉ by means of the exemplary hash function of the hash function module 20₂ using a respective binary representation of all content elements of the database 400₁₀, 400₁₁, 400₁₂, 400₆, 400₈, 400₉ of the respective communication device 10₁₀, 10₁₁, 10₁₂, 10₆, 10₈, 10₉ as the input data of the exemplary hash function.

According to the application shown in Figure 19, the method may further comprise checking whether the database hash values 401₁₀, 401₁₁, 401₁₂, 401₆, 401₈, 401₉ are all equal. One of the validation devices 41, for example the proposing device, may receive the database hash values 401₁₀, 401₁₁, 401₁₂, 401₆, 401₈, 401₉ from the respective communication device 10₁₀, 10₁₁, 10₁₂, 10₆, 10₈, 10₉. The processor of this validation device may be configured to test whether the database hash values 401₁₀, 401₁₁, 401₁₂, 401₆, 401₈, 401₉ are all equal. If this is the case, this validation device may output a signal for indicating that the selected transaction dataset has been deleted at least partially on all communication devices of the communication system 1.

According to a further example, the method may further comprise determining a respective overall transaction dataset hash value 402₁₀, 402₁₁, 402₁₂, 402₆, 402₈, 402₉ for each communication device 10₁₀, 10₁₁, 10₁₂, 10₆, 10₈, 10₉ of the further subset 12. The respective overall transaction dataset hash value 402₁₀, 402₁₁, 402₁₂, 402₆, 402₈, 402₉ may be calculated by means of the exemplary hash function using a binary representation of all transaction datasets of all the data blocks 120 and the further data block 120ₙ₊₁ of the copy of the data blocks of the respective communication device 10₁₀, 10₁₁, 10₁₂, 10₆, 10₈, 10₉ of the further subset 12 as input data of the exemplary hash function. According to this embodiment, the method may further comprise checking whether the overall transaction dataset hash values 402₁₀, 402₁₁, 402₁₂, 402₆, 402₈, 402₉ are all equal. One of the validation devices 41, for example the proposing device, may be configured to test whether the overall transaction dataset hash values 402₁₀, 402₁₁, 402₁₂, 402₆, 402₈, 402₉ are all equal.

The database hash values 401₁₀, 401₁₁, 401₁₂, 401₆, 401₈, 401₉ and/or the overall transaction dataset hash values 402₁₀, 402₁₁, 402₁₂, 402₆, 402₈, 402₉ may be stored in the RAM 25₁₀, 25₁₁, 25₁₂, 25₆, 25₈, 25₉ of the respective communication device 10₁₀, 10₁₁, 10₁₂, 10₆, 10₈, 10₉ of the further subset 12, as shown in Figure 19.

According to one example, the method may further comprise adding a second further chain element 100ₙ₊₂ to the blockchain 1000. The second further chain element 100ₙ₊₂ may be associated with a second further data block 120ₙ₊₂ of the communication system 1. The second further data block 120ₙ₊₂ may comprise a set of second further transaction datasets, such as transaction datasets 131₁, 131₂, 131ᵢ, 131ₙ₁₁. One of the second further transaction datasets may comprise an evidential information, for example the second further transaction dataset 131₁. In one example, not shown in the figures, the second further data block 120ₙ₊₂ may only comprise the second further transaction dataset 131₁.

The evidential information may prove that all database hash values 401₁₀, 401₁₁, 401₁₂, 401₆, 401₈, 401₉ and/or the overall transaction dataset hash values 402₁₀, 402₁₁, 402₁₂, 402₆, 402₈, 402₉ are equal. For example, a modification data of the second further transaction dataset 131₁ may comprise a respective signature of the database hash value 401₁₀, 401₁₁, 401₁₂, 401₆, 401₈, 401₉ of the database of the respective communication device 10₁₀, 10₁₁, 10₁₂, 10₆, 10₈, 10₉. Alternatively or in addition, the modification data of the second further transaction dataset 131₁ may comprise a respective signature of the overall transaction dataset hash value 402₁₀, 402₁₁, 402₁₂, 402₆, 402₈, and 402₉ respectively. The respective signature of the database hash value 401₁₀, 401₁₁, 401₁₂, 401₆, 401₈, 401₉ or the overall transaction dataset hash value 402₁₀, 402₁₁, 402₁₂, 402₆, 402₈, 402₉ may respectively be generated by means of the private key of the respective communication device 10₁₀, 10₁₁, 10₁₂, 10₆, 10₈, 10₉ of the further subset 12.

The second further chain element 100ₙ₊₂ may comprise header data, such as a block hash value 101ₙ₊₂, a time stamp 103ₙ₊₂ and a chain element hash value 102ₙ₊₂.

The block hash value 101ₙ₊₂ of the second further chain element 100ₙ₊₂ may dependent on at least a transaction hash value of the second further transaction dataset 131₁, which may be equal to an output value of an exemplary hash function using a binary representation of the second further transaction dataset 131₁ as input data of the exemplary hash function.

The chain element hash value 102ₙ₊₁ of the second further chain element 100ₙ₊₂ may depend on the block hash value 10₁ₙ₊₁, a time stamp 103ₙ₊₁ and the chain element hash value 102ₙ of the further chain element 100ₙ₊₁. For example, the chain element hash value 102ₙ₊₂ of the second further chain element 100ₙ₊₂ may be an output value of the exemplary hash function using a binary representation of the header data of the further chain element 100ₙ₊₁.

The program modules 20, preferably being stored on each communication device of the devices 10, such as the deletion module 20₁, the hash function module 20₂, the data block validation module 20₃, the recognition module 20₃₁, the validation detection module 20₄ and the synchronization module 20₅ may each comprise program instructions for performing the actions or steps mentioned above when one or more of the processors of the communication devices 10 read and execute these program instructions. The program modules 20 may comprise a respective main program which is stored on the respective communication device of the devices 10 for calling the deletion module 20₁, the hash function module 20₂, the data block validation module 20₃, the recognition module 20₃₁, synchronization module 20₅ and/or the validation detection module 20₄. The program instructions of the program modules 20 may be stored collectively on one or more computer-readable storage media of one or more communication devices of the devices 10, such as on one or more cache memories, RAMs and/or persistent storage devices of the devices 10, for example on the RAM 125 as shown in Figure 12.

The one or more computer-readable storage media of the one or more communication devices of the devices 10 and the program instructions of the program modules 20 may form a computer program product 2000 for processing the selected transaction dataset and for processing the data blocks 120 and the chain elements 100₁ by means of a communication system 1 according to one of the aforementioned variants.

The program instructions, for example the program instructions of the deletion module 20₁, may be configured to perform the at least partially deletion of the selected transaction dataset in the specific data block 120₂ of the data blocks 120. Furthermore, the program instructions may be configured to store the transaction hash value 621₂ of the selected transaction dataset within the communication system 1. For example, the program instruction, for example the program instructions of one of the main programs, may provoke a storing of the transaction hash value 621₂ of the selected transaction dataset in the selected transaction dataset. Furthermore, the program instructions, for example the program instructions of the hash function module 20₂, the data block validation module 20₃, the recognition module 20₃₁ and the validation detection module 20₄, may be configured to perform a communication among the communication devices 10 in order to achieve the agreement on an addition of the further chain element 100ₙ₊₁ to the blockchain 1000. Furthermore, the program instructions, for example the program instructions of one of the main programs and of the hash function module 20₂, may be configured to verify the blockchain 1000 including the further chain element 100ₙ₊₁ by means of the stored transaction hash value 621₂ of the selected transaction dataset.

In the following, an exemplary application of the communication system 1 and the computer-implemented method for processing the selected transaction dataset may be described. According to this exemplary application, the matrix elements 40ᵢⱼ of the database 400 may each comprise a respective hash value of a testimonial or a university report. In this application, the modification data of the respective transaction datasets of the data blocks 120 may respectively comprise one of the hash values of the testimonial or university reports in order to generate the database 400 by means of the transaction datasets of the data blocks 120. If the hash value of the testimonial or university report of the second transaction dataset 122₂ of the second data block 120₂ is a string which comprises illegal data, then the second transaction dataset 122₂ is supposed to be deleted at least partially, preferably completely. The second transaction dataset 122₂ may be deleted according to the deletion process described above. The validation devices 41 and/or the observer devices 43 may be computing devices of one or more universities, according to this application. The client devices 44 may be computing devices of students.

## Claims

1. A computer-implemented method for processing a selected transaction dataset (122₂) by means of a communication system (1), the communication system (1) comprising a set of communication devices (10) and data blocks (120), the set of communication devices (10) comprising a subset (11) of the communication devices (10), wherein a copy of a blockchain (1000) is stored on each communication device of the subset (11) of the communication devices (10), the blockchain (1000) comprising a set of chain elements (100), wherein each chain element (100₁, 100₂, 100₃, 100₁, 100ₙ) is associated with a respective data block (120₁, 120₂, 120₃, 120ᵢ, 120ₙ) of the data blocks (120), the data blocks (120) comprising transaction datasets for modifying a database (400), wherein the set of chain elements (100) comprises a subset (111) of the chain elements (100), wherein the chain elements (100₂, 100₃, 100ᵢ, 100ₙ) of the subset (111) of the chain elements (100) respectively comprise a respective block hash value (101₂, 101₃, 101ᵢ, 101ₙ) and a respective chain element hash value (102₁, 102₂, 102ᵢ₋₁, 102ₙ₋₁), wherein the block hash value (101₂, 101₃, 101ᵢ, 101ₙ) of the respective chain element (100₂, 100₃, 100ᵢ, 100ₙ) of the subset (111) of the chain elements (100) is dependent on at least one respective transaction hash value and the respective transaction hash value is a hash value of one of the transaction datasets of the respective data block (120₂, 120₃, 120ᵢ, 120ₙ) which is associated with the respective chain element (100₂, 100₃, 100ᵢ, 100ₙ),
wherein the chain element hash value (102₁, 102₂, 102ᵢ₋₁, 102ₙ₋₁) of the respective chain element (100₂, 100₃, 100ᵢ, 100ₙ) of the subset (111) of the chain elements (100) is dependent at least on the block hash value (101₁, 10₁₂, 101ᵢ₋₁, 101ₙ₋₁) of the chain element which immediately precedes the respective chain element (100₂, 100₃, 100ᵢ, 100ₙ) in the blockchain (1000), the method comprising:
- performing an at least partial deletion of the selected transaction dataset (122₂) of a specific data block (120₂) of the data blocks (120) which comprises the selected transaction dataset (122₂), wherein the selected transaction dataset (122₂) is specified by a deletion transaction dataset (130₁);
- storing a transaction hash value (621₂) of the selected transaction dataset (122₂) within the communication system (1), and
- performing a communication among the communication devices (10) in order to achieve an agreement on an addition of a further chain element (100ₙ₊₁) to the blockchain (1000), wherein the further chain element (100ₙ₊₁) is associated with a further data block (120ₙ₊₁) of the communication system (1), the further data block (120ₙ₊₁) comprising at least the deletion transaction dataset (130₁).

2. The method of claim 1, the method further comprising verifying the blockchain (1000) including the further chain element by means of the stored transaction hash value (621₂) of the selected transaction dataset (122₂).

3. The method of claim 2, the method further comprising setting a marker (1200₂), the marker (1200₂) specifying the specific data block (120₂) or the selected transaction dataset (122₂) or the chain element (100₂) which is associated with the specific data block (120₂), the method further comprising verifying the chain element (100₂) which is associated with the specific data block (120₂) by means of the marker (1200₂), the stored transaction hash value (621₂) of the selected transaction dataset (122₂) and the deletion transaction dataset (130₁).

4. The method of one of the claims 1, 2 or 3, the set of communication devices (10) comprising a further subset (12) of the communication devices (10), wherein the further subset (12) comprises all communication devices of the set of communication devices (10) which store a respective copy of the data blocks (120) and the further data block (120ₙ₊₁), the method further comprising performing a respective at least partially deletion of the selected transaction dataset (122₂) of the specific data block (120₂) of each copy of the data blocks (120).

5. The method of claim 4, the method further comprising determining a respective overall transaction dataset hash value (402₆, 402₈, 402₉, 402₁₀, 402₁₁, 402₁₂) for each communication device (10₆, 10s, 10₉, 10₁₀, 10₁₁, 10₁₂) of the further subset, wherein the respective overall transaction dataset hash value (402₆, 402s, 402₉, 402₁₀, 402₁₁, 402₁₂) is calculated by means of a hash function using a binary representation of all transaction datasets of at least the specific data block (120₂) of the copy of the data blocks (120) of the respective communication device (10₆, 10₈, 10₉, 10₁₀, 10₁₁, 10₁₂) of the further subset (12) as input data of the hash function, the method further comprising checking whether the overall transaction dataset hash values (402₆, 402₈, 402₉, 402₁₀, 402₁₁, 402₁₂) of all communication devices (10₆, 10₈, 10₉, 10₁₀, 10₁₁, 10₁₂) of the further subset (12) are equal.

6. The method of claim 4, wherein each communication device of the further subset (12) of the communication devices (10) comprises a respective database (400₆, 400₈, 400₉, 400₁₀, 400₁₁, 400₁₂), the database (400₆, 400₈, 400₉, 400₁₀, 400₁₁, 400₁₂) of the respective communication device (10₆, 10s, 10₉, 10₁₀, 10₁₁, 10₁₂) of the further subset (12) being generated by executing the transaction datasets of the data blocks (120) and the further data block (120ₙ₊₁), the method further comprising determining a respective database hash value (401₆, 401s, 401₉, 401₁₀, 401₁₁, 401₁₂) of the database (400₆, 400₈, 400₉, 400₁₀, 400₁₁, 400₁₂) of the respective communication device (10₆, 10₈, 10₉, 10₁₀, 10₁₁, 10₁₂) and checking whether the database hash values (401₆, 401₈, 401₉, 401₁₀, 401₁₁, 401₁₂) of all communication devices (10₆, 10₈, 10₉, 10₁₀, 10₁₁, 10₁₂) of the further subset (12) are all equal.

7. The method of claim 5 or 6, the method further comprising adding a second further chain element to the blockchain (1000), the second further chain element (100ₙ₊₂) which is associated with a second further data block (120ₙ₊₂) of the communication system (1), the second further data block (120ₙ₊₂) comprising at least a second further transaction dataset (131₁) which comprises an evidential information, the evidential information proving that all database hash values (401₆, 401₈, 401₉, 401₁₀, 401₁₁, 401₁₂) are equal and/or all overall transaction dataset hash values (402₆, 402₈, 402₉, 402₁₀, 402₁₁, 402₁₂) are equal.

8. A communication system (1) comprising a set of communication devices (10) and data blocks (120), the set of communication devices (10) comprising a subset (11) of the communication devices (10), wherein a copy of a blockchain (1000) is stored on each communication device of the subset (11) of the communication devices (10), the blockchain (1000) comprising a set of chain elements (100), wherein each chain element (100₁, 100₂, 100₃, 100ᵢ, 100ₙ) is associated with a respective data block (120₁, 120₂, 120₃, 120ᵢ, 120ₙ) of the data blocks (120), the data blocks (120) comprising transaction datasets for modifying a database (400), wherein the set of chain elements (100) comprises a subset (111) of the chain elements (100), wherein the chain elements (100₂, 100₃, 100ᵢ, 100ₙ) of the subset (111) of the chain elements (100) respectively comprise a respective block hash value (101₂, 101₃, 101ᵢ, 101ₙ) and a respective chain element hash value (102₁, 102₂, 102ᵢ₋₁, 102ₙ₋₁),
wherein the block hash value (101₂, 101₃, 101ᵢ, 101ₙ) of the respective chain element (100₂, 100₃, 100ᵢ, 100ₙ) of the subset (111) of the chain elements (100) is dependent on at least one respective transaction hash value and the respective transaction hash value is a hash value of one of the transaction datasets of the respective data block (120₂, 120₃, 120ᵢ, 120ₙ) which is associated with the respective chain element (100₂, 100₃, 100₁, 100ₙ),
wherein the chain element hash value (102₁, 102₂, 102ᵢ₋₁, 102ₙ₋₁) of the respective chain element (100₂, 100₃, 100ᵢ, 100ₙ) of the subset (111) of the chain elements (100) is dependent at least on the block hash value (101₁, 10₁₂, 101ᵢ₋₁, 101ₙ₋₁) of the chain element which immediately precedes the respective chain element (100₂, 100₃, 100ᵢ, 100ₙ) in the blockchain (1000), wherein the communication system (1) is configured to delete at least partially a selected transaction dataset (122₂) of a specific data block (120₂) of the data blocks (120) which comprises the selected transaction dataset (122₂), wherein the selected transaction dataset (122₂) is specified by a deletion transaction dataset (130₁), and to store a transaction hash value (621₂) of the selected transaction dataset (122₂) within the communication system (1),
wherein the communication devices (10) are configured to communicate with each other in order to achieve an agreement on an addition of a further chain element (100ₙ₊₁) to the blockchain (1000), wherein the further chain element (100ₙ₊₁) is associated with a further data block (120ₙ₊₁) of the communication system (1), the further data block (120ₙ₊₁) comprising at least the deletion transaction dataset (130₁),
wherein the communication system (1) is configured to verify the blockchain (1000) including the further chain element (100ₙ₊₁) by means of the stored transaction hash value (621₂) of the selected transaction dataset (122₂).

9. The communication system (1) of claim 8, wherein the communication system (1) is configured to set a marker (1200₂) for specifying the specific data block (120₂) or the selected transaction dataset (122₂) or the chain element (100₂) which is associated with the specific data block (120₂), wherein the communication system (1) is configured to verify the chain element (100₂) which is associated with the specific data block (120₂) by means of the marker (1200₂) and the deletion transaction dataset (130₁).

10. The communication system (1) of claim 8 or 9, wherein the communication system (1) is configured to store the transaction hash value (621₂) of the selected transaction dataset (122₂) in the form of data of the selected transaction dataset (122₂).

11. The communication system (1) of one of the claims 7, 8, 9 or 10, wherein the set of communication devices (10) comprises validation devices (41) and the communication system (1) is configured to take a consensus state, wherein in the consensus state of the communication system (1) the agreement on the addition of the further chain element to the blockchain (1000) is achieved among the validation devices (41).

12. The communication system (1) of one of the claims 7, 8, 9, 10 or 11, wherein the communication system (1) comprises public keys (15₁, 15₂, 15ᵢ, 15₁₀, 15₁₂) and the public keys (15₁, 15₂, 15ᵢ, 15₁₀, 15₁₂) are respectively assigned to one of the communication devices (10₁, 10₂, 10ᵢ, 10₁₀, 10₁₂) and the transaction datasets comprise information about the public keys (15₁, 15₂, 15ᵢ, 15₁₀, 15₁₂), wherein the communication system (1) comprises private keys (16₁, 16₂, 16ᵢ, 16₁₀, 16₁₂) and each of the private keys (16₁, 16₂, 16ᵢ, 16₁₀, 16₁₂) corresponds to one of the public keys (15₁, 15₂, 15ᵢ, 15₁₀, 15₁₂) and the deletion transaction dataset (130₁) comprises a digital signature (1004) which is generated by means of at least one of the private keys (16₁, 16₂, 16ᵢ, 16₁₀, 16₁₂).

13. The communication system (1) of claim 11 and 12, the set of communication devices (10) comprising a hierarchy, wherein the hierarchy divides the communication devices into the validation devices (41) and non-validation devices, wherein the validation devices (41) are configured to participate in a process of achieving the agreement on the addition of the further chain element (100ₙ₊₁) and the non-validation devices are not configured to participate in the process of achieving the agreement on the addition of the further chain element (100ₙ₊₁) to the blockchain (1000), wherein the non-validation devices comprise observer devices (43) and client devices (44), and the observer devices (43) are configured to perform an indirect communication between the client devices (44) and the validation devices (41) via the observer devices (43), wherein the public keys of the client devices (44) are respectively certified by at least one of the observer devices (43) and the public keys of the observer devices (43) are respectively certified by at least one of the validation devices (41).

14. A communication device (10₁), wherein the communication device (10₁) is part of the communication system (1) of one of the claims 8 to 13, wherein the communication device (10₁) is configured to set a marker (1200₂) for specifying the specific data block (120₂) or the selected transaction dataset (122₂) or the chain element (100₂) which is associated with the specific data block (120₂), wherein the communication device (10₁) is configured to verify the chain element (100₂) which is associated with the specific data block (120₂) by means of the marker (1200₂), the stored transaction hash value (621₂) of the selected transaction dataset (122₂) and the deletion transaction dataset (130₁).

15. A usage of the communication system (1) of one of the claims 8 to 13, the usage comprising verifying the blockchain (1000) including the further chain element (100ₙ₊₁) by means of the stored transaction hash value (621₂) of the selected transaction dataset (122₂).

16. A computer program product (2000) for processing a selected transaction dataset (122₂) by means of a communication system (1), the communication system (1) comprising a set of communication devices (10) and data blocks (120), the set of communication devices (10) comprising a subset (11) of the communication devices (10), wherein a copy of a blockchain (1000) is stored on each communication device of the subset (11) of the communication devices (10), the blockchain (1000) comprising a set of chain elements (100), wherein each chain element (100₁, 100₂, 100₃, 100ᵢ, 100ₙ) is associated with a respective data block (120₁, 120₂, 120₃, 120ᵢ, 120ₙ) of the data blocks (120), the data blocks (120) comprising transaction datasets for modifying a database (400), wherein the set of chain elements (100) comprises a subset (111) of the chain elements (100), wherein the chain elements (100₂, 100₃, 100ᵢ, 100ₙ) of the subset (111) of the chain elements (100) respectively comprise a respective block hash value (101₂, 101₃, 101ᵢ, 101ₙ) and a respective chain element hash value (102₁, 102₂, 102ᵢ₋₁, 102ₙ₋₁), wherein the block hash value (101₂, 101₃, 101ᵢ, 101ₙ) of the respective chain element (100₂, 100₃, 100ᵢ, 100ₙ) of the subset (111) of the chain elements (100) is dependent on at least one respective transaction hash value and the respective transaction hash value is a hash value of one of the transaction datasets of the respective data block (120₂, 120₃, 120ᵢ, 120ₙ) which is associated with the respective chain element (100₂, 100₃, 100ᵢ, 100ₙ),
wherein the chain element hash value (102₁, 102₂, 102ᵢ₋₁, 102ₙ₋₁) of the respective chain element (100₂, 100₃, 100ᵢ, 100ₙ) of the subset (111) of the chain elements (100) is dependent at least on the block hash value (101₁, 10₁₂, 101ᵢ₋₁, 101ₙ₋₁) of the chain element which immediately precedes the respective chain element (100₂, 100₃, 100ᵢ, 100ₙ) in the blockchain (1000), the computer program product (2000) comprising one or more computer-readable storage media (125), and program instructions collectively stored on the one or more computer-readable storage media (125), wherein the program instructions are configured
- to perform an at least partial deletion of the selected transaction dataset (122₂) of a specific data block (120₂) of the data blocks (120) which comprises the selected transaction dataset (122₂), wherein the selected transaction dataset (122₂) is specified by a deletion transaction dataset (130₁);
- to store a transaction hash value (621₂) of the selected transaction dataset (122₂) within the communication system (1);
- to perform a communication among the communication devices (10) in order to achieve an agreement on an addition of a further chain element (100ₙ₊₁) to the blockchain (1000), wherein the further chain element (100ₙ₊₁) is associated with a further data block (120ₙ₊₁) of the communication system (1), the further data block (120ₙ₊₁) comprising at least the deletion transaction dataset (130₁); and
- to verify the blockchain (1000) including the further chain element (100ₙ₊₁) by means of the stored transaction hash (621₂) value of the selected transaction dataset (122₂).
